(19) Europäisches Patentamt
European Patent Office
Office européen des brevets

(11) **EP 3 270 379 B1**

(12) **EUROPEAN PATENT SPECIFICATION**

(45) Date of publication and mention
of the grant of the patent:
**26.02.2020 Bulletin 2020/09**

(51) Int Cl.:
***G11B 27/031*** *(2006.01)*        ***G11B 27/28*** *(2006.01)*
***G10L 19/005*** *(2013.01)*        ***G10L 21/02*** *(2013.01)*

(21) Application number: **17181398.3**

(22) Date of filing: **14.07.2017**

(54) **METHOD FOR PROJECTED REGULARIZATION OF AUDIO DATA**

VERFAHREN ZUR PROJIZIERTEN REGULIERUNG VON AUDIODATEN

PROCÉDÉ DE RÉGULARISATION PROJETÉE DE DONNÉES AUDIO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **14.07.2016 EP 16179412**

(43) Date of publication of application:
**17.01.2018 Bulletin 2018/03**

(73) Proprietor: **Steinberg Media Technologies GmbH
20097 Hamburg (DE)**

(72) Inventors:
• **Rolland, Jean-Baptiste Jacques Guillaume
22453 Hamburg (DE)**
• **Grabit, Yvan
22941 Bargteheide (DE)**

(74) Representative: **Raffay & Fleck
Patentanwälte
Grosse Bleichen 8
20354 Hamburg (DE)**

(56) References cited:
**US-A- 5 878 389**

• **NICOLAS STURMEL ET AL: "SIGNAL
RECONSTRUCTION FROM STFT MAGNITUDE: A
STATE OF THE ART", PROC. OF THE 14 TH INT
CONFERENCE ON DIGITAL AUDIO EFFECTS, 19
September 2011 (2011-09-19), pages 375-386,
XP055332935,**

• **S Nawab ET AL: "Signal reconstruction from
short-time Fourier transform magnitude", IEEE
Transactions on Acoustics, Speech, and Signal
Processing, 1 January 1983 (1983-01-01), pages
986-998, XP055334285, DOI:
10.1109/TASSP.1983.1164162 Retrieved from the
Internet:
URL:http://ieeexplore.ieee.org/ielx6/29/26
178/01164162.pdf?tp=&arnumber=1164162&isn
u mber=26178**

• **GRIFFIN D W ET AL: "Signal estimation from
modified short-time Fourier transform", IEEE
TRANSACTIONS ON ACOUSTICS, SPEECH AND
SIGNAL PROCESSING, IEEE INC. NEW YORK,
USA, vol. ASSP-32, no. 2, 1 April 1984
(1984-04-01), pages 236-243, XP002618474, ISSN:
0096-3518, DOI: 10.1109/TASSP.1984.1164317**

• **GERCHBERG R W ET AL: "A PRACTICAL
ALGORITHM FOR THE DETERMINATION OF
PHASE FROM IMAGE ANDDIFFRACTION PLANE
PICTURES", OPTIK, WISSENSCHAFTLICHE
VERLAG GMBH, DE, vol. 35, no. 2, 1 January 1972
(1972-01-01), pages 237-246, XP000615059, ISSN:
0030-4026**

• **CHAMI MOUHCINE ET AL: "An architectural
comparison of signal reconstruction algorithms
from short-time Fourier transform magnitude
spectra", INTERNATIONAL JOURNAL OF
SPEECH TECHNOLOGY, KLUWER,
DORDRECHT, NL, vol. 18, no. 3, 27 May 2015
(2015-05-27), pages 433-441, XP035518832, ISSN:
1381-2416, DOI: 10.1007/S10772-015-9281-9
[retrieved on 2015-05-27]**

- Christian Schörkhuber ET AL: "CONSTANT-Q TRANSFORM TOOLBOX FOR MUSIC PROCESSING", Conference Paper from SMC Conference 2010, 31 December 2010 (2010-12-31), XP055332947, Retrieved from the Internet: URL:http://smcnetwork.org/files/proceedings/2010/48.pdf [retrieved on 2017-01-06]
- AMIR ADLER ET AL: "Audio Inpainting", IEEE TRANSACTIONS ON AUDIO, SPEECH AND LANGUAGE PROCESSING, IEEE SERVICE CENTER, NEW YORK, NY, USA, vol. 20, no. 3, 1 March 2012 (2012-03-01), pages 922-932, XP011397627, ISSN: 1558-7916, DOI: 10.1109/TASL.2011.2168211
- R Kimmel ET AL: "Images as Embedded Maps and Minimal Surfaces: Movies, Color, Texture, and Volumetric Medical Images", International Journal of Computer Vision, 1 September 2000 (2000-09-01), pages 111-129, XP055332937, Boston DOI: 10.1023/A:1008171026419 Retrieved from the Internet: URL:http://www.cs.technion.ac.il/~ron/PAPERS/KimMalSoc_IJCV2000.pdf
- DERICHE R ET AL: "Vector-Valued Image Regularization with PDEs: A Common Framework for Different Applications", IEEE TRANSACTIONS ON PATTERN ANALYSIS AND MACHINE INTELLIGENCE, IEEE COMPUTER SOCIETY, USA, vol. 27, no. 4, 1 April 2005 (2005-04-01), pages 506-517, XP011127594, ISSN: 0162-8828, DOI: 10.1109/TPAMI.2005.87
- David Tschumperlé: "PDE's Based Regularization of Multivalued Images and Applications - Régularisation d'Images Multivaluées par EDP et Applications", , 13 December 2002 (2002-12-13), XP055430113, Retrieved from the Internet: URL:https://tschumperle.users.greyc.fr/publications/tschumperle_phd02.pdf [retrieved on 2017-11-29]
- Clem Karl: "Regularization in Image Restoration and Reconstruction", HANDBOOK OF IMAGE AND VIDEO PROCESSING (Second Edition), 31 July 2010 (2010-07-31), pages 183-201, XP055430119, Amsterdam, NL ISBN: 978-0-12-119792-6 Retrieved from the Internet: URL:https://webdocs.cs.ualberta.ca/~nray1/CMPUT615_2010/Smoothing/Regularization.pdf [retrieved on 2017-11-29]
- Leon A Gatys ET AL: "Texture Synthesis Using Convolutional Neural Networks", , 27 May 2015 (2015-05-27), XP055430132, Retrieved from the Internet: URL:https://pdfs.semanticscholar.org/f54a/e5229960b828db7cd963150c8b8bc2684737.pdf

**Description**

This invention concerns the modification, especially correction, of audio data. For modifying or correcting audio data many methods are known in the state-of-the-art. To modify or correct audio data it is well known to transform the audio data from the time domain to a frequency-time domain using for example short-term Fourier transformation. After modification of the transformed audio data the result is transformed back to the time domain, especially using an inverse of the transform used to transform the time domain audio data to the frequency-time domain.

Such audio processing includes cleaning the audio signal from artefacts or reconstructing missing audio data. For example, it is known to recover missing phase information as disclosed in Nicolas Sturmel, Laurent Daudet, "signal reconstruction from as STFT magnitude: a state of the art" in Proc. of the 14th International conference on Digital audio effects, Paris, France, September 19-23, 2011.

In a different field of technology, picture reconstruction and improvement is known, for example from R. Kimmel, R. Malladi, N. Sochen, "Images Embedded to Maps and Minimal Surfaces: Movies, Colour, Texture and Volumetric Medical Images" in International Journal of computer vision 39(2), 111-129, 2000 or D. Tschumperlé, R. Derich, "Vector-Valued Image Regularization with PDE's: a Common Framework for Different Applications" in IEEE Transactions on Pattern Analysis and Machine Intelligence (Volume:27 , Issue: 4)

It is further known to use special algorithms used for image in-painting, to reconstruct audio data using dictionaries as in Amir Adler et al., "Audio Inpainting" in IEEE Transactions on Audio, Speech, and Language Processing (Volume: 20, Issue: 3).

Many of the known modifications or reconstructions use an iterative process wherein the data is modified step-by-step, normally implemented by some kind of loop. The loop then includes some modification steps which are applied several times during several loop passes, e.g. once every loop pass.

The object of the invention at hand is to improve the quality and/or the speed of the audio modification or reconstruction.

This is achieved by an inventive modification of at least some part of the transformed audio data, especially phase data, not necessarily at each pass of the loop used to modify the audio data but at least in every fifth pass of the loop. This, quite simple operation, regarding the phase data, ensures a much higher quality of the modified audio data. Much higher quality especially provides more realistic or more natural audio data. Realistic audio data is such audio data that is generated in natural events like talking or singing people or some vehicle passing by and not generated only by artificially constructing audio data like in a synthesizer. The invention leads to modified (computed) audio data that will be perceived more likely as a natural or unmodified or realistic audio signal when being played back to human beings.

With this approach of the invention many different methods to modify audio data can be used or combined. They just need to work in an iterative way or by repeating some given kind of modification or applying some modification several times whereby the modification does not have to be the same during the different steps or iterations or loop passes. Normally the steps of modification applied one after the other will have some connections in between them to follow a more general principle but will differ from step to step or from loop pass to loop pass as the audio data changes from loop pass to loop pass.

A method to process first audio data, especially time-domain audio data, in a first domain by

 a. transforming the first audio data using a first transformation generating, especially time-frequency domain, audio representation data, especially spectrogram data, having first magnitude and first phase data and using first magnitude and first phase data as first iterated magnitude and first iterated phase data initialized to first magnitude and first phase data (step a)

 b. iteratively changing the iterated magnitude and iterated phase data by looping the following steps (step b):

  i. modifying, especially regularizing, the iterated magnitude and iterated phase data to obtain modified magnitude and modified phase data (step i)
  characterized by

  ii. at least in every 5th loop pass performing the following steps

   1. transforming the modified magnitude and modified phase data to generate complex data, especially complex time-domain data (step 1)

   2. calculating more real data from the complex data (step 2)

   3. transforming the more real data generating second phase data, in the time-frequency domain, (step 3.i) and using a combination of the modified magnitude and second phase data with the first magnitude and first phase data as new iterated magnitude and new iterated phase data, especially

by dividing the modified magnitude and second phase data in at least one first and at least one second part and dividing the first magnitude and first phase data in at least one first and at least one second part and use of the at least one first part of the modified magnitude and second phase data and the at least one second part of the first magnitude and first phase data as new iterated magnitude and new iterated phase data or

by dividing the modified magnitude and second phase data in at least one first and at least one third part and dividing the first magnitude and first phase data in at least one first and at least one third part and use of the at least one first part of the modified magnitude and second phase data and a mixture of the at least one third part of the first magnitude and first phase data and the at least one third part of the modified magnitude and second phase data as new iterated magnitude and new iterated phase data or

by dividing the modified magnitude and second phase data in at least one first and at least one third part and dividing the first magnitude and first phase data in at least one first and at least one third part and use of the at least one first part of the first magnitude and first phase data and a mixture of the at least one third part of the first magnitude and first phase data and the at least one third part of the modified magnitude and second phase data as new iterated magnitude and new iterated phase data or

by dividing the modified magnitude and second phase data in at least one first and at least one second part and at least one second part and at least one third part and dividing the first magnitude and first phase data in at least one first and at least one second part and at least one third part and use of the at least one first part of the first magnitude and first phase data and of the at least one second part of the modified magnitude and second phase data and a mixture of the at least one third part of the first magnitude and first phase data and the at least one third part the at least one second part of the modified magnitude and second phase data as new iterated magnitude and new iterated phase data

or

using a combination of the more real data with a transformation of the first magnitude and first phase data as new data, especially

by dividing the more real data in at least one first and at least one second part and dividing the transformation of the first magnitude and first phase data in at least one first and at least one second part and use of the at least one first part of the more real data and the at least one second part of the transformation of the first magnitude and first phase data as new data or
by dividing the more real data in at least one first and at least one third part and dividing the transformation of the first magnitude and first phase data in at least one first and at least one third part and use of the at least one first part of the more real data and a mixture of the at least one third part of the transformation of the first magnitude and first phase data and the at least one third part of the more real data as new data or by dividing the more real data in at least one first and at least one third part and dividing the transformation of the first magnitude and first phase data in at least one first and at least one third part and use of the at least one first part of the transformation of the first magnitude and first phase data and a mixture of the at least one third part of the transformation of the first magnitude and first phase data and the at least one third part of the more real data as new data or
by dividing the more real data in at least one first and at least one second part and at least one second part and at least one third part and dividing the transformation of the first magnitude and first phase data in at least one first and at least one second part and at least one third part and use of the at least one first part of the transformation of the first magnitude and first phase data and of the at least one second part of the more real data and a mixture of the at least one third part of the transformation of the first magnitude and first phase data and the at least one third part the at least one second part of the more real data as new data

and transforming the new data generating new iterated magnitude and new iterated phase data

and in every other loop pass

3a. using a combination of the modified magnitude and modified phase data with the first magnitude and first phase data as new iterated magnitude and iterated phase data, especially

by dividing the modified magnitude and modified phase data in at least one first and at least one second part and dividing the first magnitude and first phase data in at least one first and at least one second part and use of the at least one first part of the modified magnitude and modified phase data and the at least one second part of the first magnitude and first phase data as new iterated magnitude and iterated phase data or

by dividing the modified magnitude and modified phase data in at least one first and at least one third part and dividing the first magnitude and first phase data in at least one first and at least one third part and use of the at least one first part of the modified magnitude and modified phase data and a mixture of the at least one third part of the first magnitude and first phase data and the at least one third part of the modified magnitude and modified phase data as new iterated magnitude and iterated phase data or by dividing the modified magnitude and modified phase data in at least one first and at least one third part and dividing the first magnitude and first phase data in at least one first and at least one third part and use of the at least one first part of the first magnitude and first phase data and a mixture of the at least one third part of the first magnitude and first phase data and the at least one third part of the modified magnitude and modified phase data as new iterated magnitude and iterated phase data or by dividing the modified magnitude and modified phase data in at least one first and at least one second part and at least one second part and at least one third part and dividing the first magnitude and first phase data in at least one first and at least one second part and at least one third part and use of the at least one first part of the first magnitude and first phase data and of the at least one second part of the modified magnitude and modified phase data and a mixture of the at least one third part of the first magnitude and first phase data and the at least one third part the at least one second part of the modified magnitude and modified phase data as new iterated magnitude and iterated phase data,

especially transforming the iterated magnitude and iterated phase data to generate modified audio data in the first domain (step c).

In the above and the following the wording "third part"/"third parts" is even used when only two parts are used to unify the disclosure by denoting the parts to be mixed always as third part(s). This does not mean that a second part must exist if a third part is required.

In another aspect, the invention may provide an audio processing device comprising at least one processor; and at least one memory; wherein the memory stores parts or blocks of or complete first audio data; and wherein the device is programmed to perform the processing of the first audio data according to method set out above using the at least one processor to perform the steps a to c.

In yet another aspect, the invention may provide a method of processing first audio data in a first domain, comprising providing an audio processing device including at least one processor and at least one memory; wherein the at least one processor is programmed to perform an algorithm that processes first audio data and improves the quality of audio data modification or gives the audio data a more realistic or natural sound; the algorithm including transforming the audio data in the audio processing device through a series of loop passes; while at least in every 5th loop pass the audio data is changed to become more real.

The principle of this invention ensures that the modified audio data is more real or more realistic than without applying the invention. This is achieved by removing or reducing the amount or part of imaginaries values or imaginary parts of complex values representing the audio data, especially when transferred back to time domain.

First audio data especially consists of amplitude or magnitude and phase data in dependence of time and/or frequency, especially amplitude data given over at least one time interval. In general it especially consists of a vector field representing the first audio data given over a first space and/or subset, especially on a subset of Euclidean space wherein the directions of the Euclidean space might be assigned dimensions of e.g. length, time and/or frequency. In most cases the subset the vector field is defined on will be 2 dimensional with dimensions of time and frequency attached to the directions in that 2 dimensional subset.

The process in accordance with an aspect of the invention includes transforming first audio data being in a first domain, especially time domain audio data, using a first transformation to generate time-frequency domain audio representation data, especially spectrogram data, having first magnitude and first phase data. First audio data can be generated by various methods. For example, natural sounds could be recorded using for example a microphone and the recording can be digitized to generate first audio data. First audio data could as well be generated by a synthesizer or by modifying audio data originated for example from a synthesizer or a digitized recording of sounds.

The transformation, as any transformation in this application, can be implemented in various ways. In general, it will be a mathematically defined process to convert the first audio data generating time-frequency domain audio representation data. This can be done, for example by the use of Short-Term Fourier Transformation or Constant-Q Transformation, for example known from Christian Schorkhuber, Anssi Klapuri, "Constant-Q Transformed Toolbox For Music Processing" Conference Paper from SMC Conference 2010 (2010), accessible via http://smcnetwork.org/files/proceedings/2010/48.pdf.

This, for example, generates spectrogram data that, in contrast to a spectrum, evolves over time. In general, the transformation will generate data having first magnitude and phase data, which is the same as first magnitude data and first phase data. In many cases the magnitude data will be represented by the absolute value of a complex value while the phase data is represented by the angle of a complex value.

Starting from this first magnitude and phase data the invention changes the data by using an iterative process represented by a loop that will be passed many times and that, in each loop pass has steps of processing. The data changed might be the iterated audio data and/or the iterated magnitude and phase data initially defined as (copy of) the first audio data and/or the first magnitude and phase data and/or the time-frequency audio representation data while, in general, at least at the end of the processing modified audio data, especially in the time domain, is generated. In general, at the end of each loop pass new magnitude and/or phase data (e.g. named modified and/or second magnitude and/or modified phase and/or second phase data) is generated to be used as (new) iterated data (as surrogate for the first audio data), e.g. for the next loop pass or at the end of the loop for generating modified audio data.

It is preferred to initialize the first magnitude data and first phase data as iterated magnitude and iterated phase data. This means that the first magnitude data and first phase data are used as first iterated magnitude and first iterated phase data. The looping starts with the first magnitude data and first phase data as iterated magnitude and iterated phase data.

The steps of the iterative process in one and/or each loop pass, step b, include modifying the iterated magnitude and phase data or iterated magnitude and iterated phase data (which is the same) to obtain modified magnitude and phase data or modified magnitude data and modified phase data (which is the same).

Modifying, especially the iterated magnitude and phase data or iterated magnitude and iterated phase data, can be performed by applying a modification, especially to the iterated magnitude and phase data or iterated magnitude and iterated phase data. Different or identical modification can be applied to magnitude or phase data. Magnitude and phase data might be regularized together but it is especially preferred to regularize them separately.

A modification can be performed in very many different ways for example such iterated modification is known from audio or image processing. Mostly the modification will be performed by applying at least one mathematically defined modification, convolution kernel and/or projection to the iterated magnitude and phase data. This modification can, for example, be performed directly on the iterated magnitude and phase data or include a transformation, modification and transformation. Therefore, the actual modification can, for example, be performed in the time domain or time-frequency domain. In most cases the modification or modifying can be performed by the application of a regularization, matrix convolution with a convolution kernel or/and a projection defined e.g. by matrix, tensor, matrix field or tensor field.

The modification can be any modification, e.g. used to facilitate any purpose, e.g. to manipulate a picture or audio data, especially audio spectrogram data. As the invention is used to improve the effect and/or result of the modification and works independent of the modification, there is no necessary restriction regarding the modification. Any known modification, especially such to modify audio and/or image data can be used.

The modification is preferably a regularization, especially performed by a regularization algorithm. A regularization algorithms consists of a algorithm simplifying data in a way that only interesting features are preserved and/or simplifying data in a way that only features not responsible of overfitting the regularization model are preserved, further described in "PDE's Based Regularization of Multivalued Images and Applications", these by David Tschumperlé, available at https://tschumperle.users.greyc.fr/publications/tschumperle_phd02.pdf and/or "Regularization in Image Restoration and Reconstruction", W. Clem Karl, available at https://webdocs.cs.ualberta.ca/~nray1/CMPUT615_2010/Smoothing/Regularizat ion.pdf) and/or for "Regularization" by Wikipedia.com.

The modification and/or regularization might be:

- derived from a physical model, for example defined with spatiotemporal partial differential equations (e.g. d'Alembert's Equation, Fourier's Equation, ...)

- derived from the resolution of an inverse-problem, for example by minimizing a metric and/or norm on the data (e.g. Tikhonov regularization, ...)

- derived from a similarity search and/or texture-based approach.

Those three examples and different implementations of those are known in the state in the art, e.g. for modifying audio or image data. They shall be described in more detail in the following:

The regularization derived from a physical model can define the relation between time or iterations, position (in a 2 dimensional picture or 3 dimensional volume or a time frequency 2 dimensional room, e.g. in a 2 dimensional time frequency spectrogram) and magnitude or phase of the data to be modified.

A typical suitable physical model is something bringing in relation one physical value to the time and the position inside the environment, e.g. the physical value P(x,y,z,t) with x,y,z the position in space and t the time. The physical model will give a relation between different partial differential equations involving P and its derivates to x,y,z,t. The value of P could be anything in the real world: a concentration of a product inside a liquid, a temperature, the pressure of air, anything that can be modelized with such equation.

The physical model is then modified to make an analogy to the regularization task, e.g. of spectrogram magnitude and phase data. This might be done by removing dimensions to fit the dimension of the data to be modified, e.g. removing the dimension z since a spectrogram has only two dimensions instead of three, and optionally making the isotropic physical model anisotropic. This means that a isotropic physical model (optionally reduced in dimensions) describes the propagation of a physical value throw the axis x,y and/or z with the same partial differential equation and this partial differential equation contain some constant values multiplying the partial differentials to the axis x, y and/or z. If those constant values are the same for the axis x, y and/or z, then one might introduce different constants to replace these same constants and assign one for each axis x, y and/or z to make the equation anisotropic. Such a modification is known in the state of the art.

For example with the Fourier equation, it works can be done like this starting with the Fourier equation:

$$dP(x,y,z,t)/dt = alpha * (d^2P(x,y,z,t)/dx^2 + d^2P(x,y,z,t)/dy^2 + d^2P(x,y,z,t)/dz^2)$$

The first step consist to get rid of the dimensions that are not needed, e.g. to get a 2-dimensions relation (in that case we fix z constant to O):

$$dP(x,y,z,t)/dt = alpha * (d^2P(x,y,z,t)/dx^2 + d^2P(x,y,z,t)/dy^2)$$

Now one makes the isotropic equation anisotropic by replacing the constant value multiplying each partial differential related to each axis x and y by two different constant values:

$$dP(x,y,z,t)/dt = alpha1 * d^2P(x,y,z,t)/dx^2 + alpha2 * d^2P(x,y,z,t)/dy^2$$

A regularization derived from the resolution of an inverse-problem might be performed by a modification that minimizes a norm

(https://en.wikipedia.org/wiki/Norm_(mathematics)), especially of an equation involving a combination of vector operators

(https://en.wikipedia.org/wiki/Vector_operator) and linear algebra operators such as matrix operations applied on the data. Such modifications are known in the state of the art.

A relevant example is the use the matrix $L^2$ Norm or Euclidean norm (https://en.wikipedia.org/wiki/Norm_(mathematics)#Euclidean_norm) as norm and the Laplacian as the vector operator used to write the equation inside the metric. In that case one obtains a value that is the matrix $L^2$ norm of the Laplacian of the data matrix that need to be minimized.

In the case of the resolution of the inverse problem of minimizing the norm of the equation could be done by using the gradient algorithm. (Such a modification by minimization of a norm is state of the art.)

A modification derived from a similarity search and/or texture-based approach could be given e.g. by:

- 2D Auto-Regressive Model: In that case, a state-of-the-art regression of the iterated magnitude and iterated phase data, e.g. spectrogram data, is used, e.g. a 2 dimensional auto-regressive model. This means that the iterated magnitude and iterated phase data is used to train a 2 dimensional auto-regressive filter that is used to synthesis data by modifying iterated magnitude and iterated phase data. An auto-regression is commonly used in the state of the art in order to learn the characteristics of a signal, which is in that case the iterated magnitude and iterated phase data, e.g. 2d spectrogram data. The "learning" could be done with any existing method to solve inverse-problems.

- Texture Synthesis using Deep Learning: Basically, the already existing iterated magnitude and iterated phase data,

e.g. spectrogram data, is used to train a Convolutional Neural Network that will then use the learned to synthesis a texture by modifying iterated magnitude and iterated phase data. Such methods are known from the state of the art e.g. in image processing (see for example "Texture Synthesis Using Convolutional Neural Networks", Leon A. Gatys et al., https://pdfs.semanticscholar.org/f54a/e5229960b828db7cd963150c8b8bc2 684737.pdf)

- A simple texture-matching approach using an expert system based approach to detect sub-images containing textures in the iterated magnitude and iterated phase data , e.g. spectrogram data (https://en.wikipedia.org/wiki/Image_texture) and copy those textures to modify the iterated magnitude and iterated phase data.

Such modifications are state of the art.

Preferably step b, the iterative changing of the data, is repeated at least the n times, n being calculated by (pre-defined number, for example 8)x (time duration of the range to inpaint in second)x(audio Sample-Rate of the first audio data)/(Size of the FFT hop in the transformation of the first audio data).

While the range to inpaint is preferably defined by the at least first part and/or at least one filtered data part and/or is a time range of the first audio data that shall be modified. The range to inpaint is modified by the process, reconstructed by the process and/or regularized by the process. Alternatively, it is preferred to choose n higher than 20, especially higher than 50. Alternatively, or in addition for stopping the iteration or the processing of step b or the looping there can be a predefined number of loop passes or some criteria can be defined which is used to decide whether another loop pass is performed or not. Such criteria could, for example, be some criteria related to the quality of the audio data, for example some metric used together with some kind of limit regarding this metric, while looping is ended when the limit is achieved first time. Such metric, for example, could be the one defined in paragraph 6.1 of Nicolas Sturmel, Laurent Daudet, "signal reconstruction from as STFT magnitude: a state of the art" (see above).

Preferably step b, the iterative changing of the data, is repeated at least the n times, n being calculated by (pre-defined number, for example 8)x (time duration of the range to inpaint in second)x(audio Sample-Rate of the first audio data)/(Size of the FFT hop in the transformation of the first audio data). While the range to inpaint is preferably defined by the at least first part and/or at least one filtered data part and/or is a time range of the first audio data that shall be modified. The range to inpaint is modified by the process, reconstructed by the process and/or regularized by the process. Alternatively, it is preferred to choose n higher than 20, especially higher than 50. Alternatively, or in addition for stopping the iteration or the processing of step b or the looping there can be a predefined number of loop passes or some criteria can be defined which is used to decide whether another loop pass is performed or not. Such criteria could, for example, be some criteria related to the quality of the audio data, for example some metric used together with some kind of limit regarding this metric, while looping is ended when the limit is achieved first time. Such metric, for example, could be the one defined in paragraph 6.1 of Nicolas Sturmel, Laurent Daudet, "signal reconstruction from as STFT magnitude: a state of the art" (see above).

The invention includes to perform the steps of phase optimization at least every fifth loop pass. It is preferred to perform those steps (1 to 3) more often or more frequently, especially in every second, third or in every loop pass or processing of the looping steps i and ii as this enhances the result further. But in some cases or when the quality of the result should be trade-in for less processing time it might be sufficient to perform the steps 1 to 3 less often, for example only every fifth loop pass. The loop to which the loop pass is referred to is the loop defined in step b.

But in most cases, when the quality of the results in terms of a most realistic audio experience shall be traded in for less calculation time it is advisable to not reduce the frequency of the phase optimization but to reduce the amount of loop passes. This might reduce the quality of the modification or restoration or inpainting but will ensure a realistic audio experience based on a playback of the modified audio data.

The steps defined in step 3a will only be performed when phase optimization is not used in a loop pass. In this loop passes steps 1 to 3 will not be performed. This means either steps 1 to 3 are performed or step 3a is performed in one loop pass. This results in step 3a not being performed at all if phase optimization is performed during every loop pass.

Phase optimization consists of the steps 1 to 3, which include transforming the modified magnitude and phase data or modified magnitude and modified phase data to generate complex data, especially complex time-domain data.

The transformation can be any transformation as described above, e.g. in regard to the transformation in step a. It is preferred to use a transformation that is the inverse of the transformation used in step a for transforming the first audio data.

Based on that complex data, which is preferably time domain data, more real data is calculated. Data is more real when its real part is, compared to the complete complex value, higher than before. This can be done in many ways, for example by just cancelling the non-real part, especially the imaginary part of the complex data. But it would be sufficient, e.g. to reduce the imaginary part. The imaginary part is reduced when the absolute value of the imaginary part is reduced.

It is preferred to calculate based on the complex data, which is preferably time domain data, real data in step 2 having no imaginary part but only a real part.

In one alternative the (more) real data is then transformed to generate second phase data, especially second phase data in time-frequency domain. Here again the transformation can be implemented in various ways. In general, it will be a mathematically defined process to convert the real data generating second phase data, especially second phase data in time-frequency domain. This can be done, for example by the use of Short-Term Fourier Transformation or Constant-Q Transformation. It is preferred to use the same transformation as used in step a for transforming the first audio data.

It is preferred to perform step 3 into sub steps

3.i transforming the more real data generating second phase data, especially in the time-frequency domain and

3.ii using a combination of the modified magnitude and second phase data with the first magnitude and first phase data as new iterated magnitude and new iterated phase data. Based on the modified magnitude and second phase data a combination with the first magnitude and phase data is generated and used as new iterated magnitude and phase data. This means that the iterated magnitude and phase data is substituted by that combination with the first magnitude and phase and the new iterated magnitude and phase data is used for the next step which e.g. can be step b.i. in the next loop pass or step c. if the loop is ended.

The combination can be generated in many different ways normally there will be some kind of masking and/or projecting. For example, when the method is used to reconstruct a missing or corrupted part of the first audio data there will be one or more regions in the iterated audio data or in the iterated magnitude and phase data that shall be reconstructed (especially first part). In this case it is especially preferred to use modified magnitude and second phase data of those regions and first magnitude and phase data from outside those regions (especially second and/or third part), while in the border region of those regions (especially third part) use of both, modified magnitude and second phase data as well as first magnitude and phase data, especially as mixture, is preferred. Many different ways of combining modified magnitude and second phase data with the first magnitude and phase data to generate such a combination are possible. Different methods and/or projections can be used e.g. like binary masks, and/or transparency (alpha) masks.

In another alternative a combination of the more real data with a transformation of the first magnitude and first phase data is used as new data and the new data is transformed generating new iterated magnitude and new iterated phase data.

The combination of modified magnitude data and modified phase data with the first magnitude and first phase data as new iterated magnitude and phase data can be preferably performed by

using for at least one first part of the data the modified magnitude data and modified phase data or the first magnitude and first phase data and

using for at least one third part of the data a mixture of the first magnitude and first phase data and the modified magnitude data and modified phase data
or by

using for at least one first part of the data the first magnitude and first phase data and

using for at least one third part of the data using a mixture of the first magnitude and first phase data and the modified magnitude data and modified phase data
or by

using for at least one first part of the data the modified magnitude data and modified phase data and

using for at least one second part of the data the first magnitude and first phase data and

using for at least one third part of the data a mixture of the first magnitude and first phase data and the modified magnitude data and modified phase data.

Preferably the parts are defined by subsets of the space and/or the subset the data to be combined is defined on and/or given on, especially by subsets of the first space and/or subset and/or a transformation, especially by the use of the first transformation, of the first space and/or subset. This will provide defined parts of both data, e.g. modified magnitude and phase data as well as first magnitude and phase data, to be combined, e.g. at least one first, second and/or third part of modified magnitude and phase data as well as at least one first, second and/or third part of first magnitude and phase data.

In a preferred alternative the parts are defined by filters to be applied to the data to be combined, especially as described regarding first, second and/or third filtered data parts. The filters being applied to both data to be combined, e.g. modified magnitude and phase data as well as first magnitude and phase data, will provide defined parts of both data to be combined, e.g. at least one first, second and/or third part of modified magnitude and phase data as well as at least one first, second and/or third part of first magnitude and phase data.

That means that the parts are, especially, defined in a way that both data to be combined is by them divided in at least one first, second and/or third part. If e.g. the parts are given by time and/or frequency intervals and/or subsets of the time frequency domain this will allow to separate first magnitude and phase data as well as modified magnitude and phase data to be divided according to the defined parts. Use of filters will even allow to separate more real data as well first audio data according to the defined parts. If e.g. the parts are given by time intervals this will allow to directly separate first magnitude and phase data as well as modified magnitude and phase data as well as more real data as well as first audio data according to the defined parts (without the use of filters).

The mixture, as any mixture in this application, might be any mixture, especially a normalized mixture, especially normalized to the maximum and/or minimum of the data to be mixed or its magnitude, e.g. the first data or its magnitude and/or the modified data or its magnitude, especially used by at least one mixing function as described below as $A(v)$ and/or $a(v)$.

The mixture and/or combination might be defined by

$$\text{New iterated magnitude data } (v) = \text{Abs}(A(v) * \text{first magnitude data } (v) *$$
$$\text{Exp}(i*\text{first phase data } (v)) + (1 - A(v)) * \text{modified magnitude data}(v) *$$
$$\text{Exp}(i*\text{modified phase data}(v)))$$

And

$$\text{New iterated phase data}(v) = \text{Angle}(A(v) * \text{first magnitude data}(v) * \text{Exp}(i*\text{first}$$
$$\text{phase data}(v)) + (1 - A(v)) * \text{modified magnitude data}(v) * \text{Exp}(i*\text{modified phase}$$
$$\text{data}(v)))$$

In general for any mixture and/or combination in this application,

$$\text{Combined or mixed magnitude data } (v) = \text{Abs}(A(v) * \text{first magnitude data to be}$$
$$\text{combined } (v) * \text{Exp}(i*\text{first phase data to be combined } (v)) + (1 - A(v)) * \text{second}$$
$$\text{magnitude data to be combined } (v) * \text{Exp}(i*\text{second phase data to be combined}$$
$$(v)))$$

And

$$\text{Combined or mixed phase data}(v) = \text{Angle}(A(v) * \text{first magnitude data to be}$$
$$\text{combined } (v) * \text{Exp}(i*\text{first phase data to be combined } (v)) + (1 - A(v)) * \text{second}$$
$$\text{magnitude data to be combined } (v) * \text{Exp}(i*\text{second phase data to be combined}$$
$$(v)))$$

Or

$$\text{Combined or mixed data } (v) = A_M (v) \times \text{first data to be combined} + (1_M - A_M$$
$$(v)) \times \text{second data to be combined}$$

or in the case of real and/or not complex data:

$$\text{Combined or mixed data (v)} = \text{Abs}(A(v) * \text{first data to be combined (v)} *$$
$$\text{Exp}(i*\text{first data to be combined (v)}) + (1- A(v)) * \text{second data to be combined}$$
$$\text{(v)} * \text{Exp}(i*\text{second data to be combined (v)}))$$

In order to accelerate the speed of this operation while keeping an acceptable audio quality, this definition could be simplified e.g. using a simple mixing of both data by

$$\text{New iterated magnitude data (v)} = A(v) * \text{first magnitude data(v)} + (1- A(v)) *$$
$$\text{modified magnitude data}$$

And

$$\text{New iterated phase data (v)} = a(v) * \text{first phase data(v)} + (1- a(v)) * \text{modified}$$
$$\text{phase data(v)}.$$

In general:

$$\text{combined or mixed magnitude data to be combined (v)} = A(v) * \text{first data to be}$$
$$\text{combined (v)} + (1- A(v)) * \text{second magnitude data to be combined}$$

And

$$\text{combined or mixed phase data (v)} = a(v) * \text{first phase data to be combined (v)}$$
$$+ (1- a(v)) * \text{second phase data to be combined (v)}.$$

With, in all cases, v being a vector giving a point in the space and/or subset the data to be combined or mixed is defined on and/or v being a vector given on the third parts (especially for mixing third parts), the first space (especially for combining) and/or subset and/or a transformation, especially by use of the first transformation, of the first space (especially for combining) and/or subset, e.g. a point in the space or subset the vector field corresponding to or defining the audio representation data or the first audio data, transformed with the first transformation, is defined on, especially v is a point in time frequency domain or time domain given on a time interval, especially in time domain, or on a time and/or frequency interval, especially in time frequency domain. v might e.g. be a 2 dimensional vector on a plane of an image, a 2 dimensional vector of time and frequency, e.g. on an spectrogram plane, a 3 dimensional vector in a volume or a 3 dimensional vector of time and 2 dimensional coordinates in a picture plane of a movie evolving over time.

With $A(v)$ and $a(v)$, in all cases, preferably being monotonic or absolute monotonic functions, at least over the space and/or subset the data to be combined or mixed is defined on and/or the third parts (especially for mixing third parts), the first space (especially for combining) and/or subset and/or a transformation, especially by use of the first transformation, of the first space (especially for combining) and/or subset, e.g. over the subset, especially time and/or frequency interval, v is given on.

With $A(v)$ and $a(v)$, in all cases, preferably, having real values between 0 and 1 at least over the third parts (especially for mixing third parts) and/or that subset and/or interval v is given on and/or the space and/or subset the data to be combined or mixed is defined on and/or given on the first space (especially for combining) and/or subset and/or a transformation, especially by use of the first transformation, of the first space (especially for combining) and/or subset.

With $A_M(v)$, in all cases, being a Tensor, including scalars and vectors, being preferably monotonic or absolute monotonic, at least over the third parts (especially for mixing third parts) and/or the space and/or subset the data to be combined or mixed is defined on and/or the first space (especially for combining) and/or subset and/or a transformation, especially by use of the first transformation, of the first space (especially for combining) and/or subset, e.g. over the subset, especially time and/or frequency interval, v is given on.

With $A_M$ (v), in all cases, further preferably, consisting of real values between 0 and 1 at least over the third parts (especially for mixing third parts) and/or that subset and/or interval v is given on and/or the space and/or subset the data to be combined is defined on and/or given on the first space (especially for combining) and/or subset and/or a transformation, especially by use of the first transformation, of the first space (especially for combining) and/or subset. e.g. AM (v) = (A(v),a(v))$^T$

With $1_M$ having the same dimension as $A_M$ (v) but consisting of only the values 1, e.g. in a 2x1 dimensional case

$$1_M = (1,1)^T$$

It is preferred to use as the at least one first part, the at least one second part and/or the at least one third part subsets of the space the data to be combined, e.g. the transformed data and/or v, is defined and/or given on, and/or of the first space and/or subset and/or of a transformation, especially by use of the first transformation, of the first space and/or subset, especially subsets of the transformed (with the same transformation used to transform the data) subset of the Euclidean space defined above. It is especially preferred to use such subsets that the parts (first, second and/or third parts) cover the complete space and/or subset v is given on and/or the data to be combined, e.g. the transformed data (the audio representation data), is defined and/or given on, and/or the complete first space and/or subset and/or a transformation, especially by use of the first transformation, of the first space and/or subset e.g. the complete Euclidean subset described above transformed with the first transformation (used to transform the data).

It is preferred to use first, second and/or third parts defined by time intervals and/or frequency intervals, e.g. in time frequency domain, e.g. with audio representation data, and/or time and/or amplitude intervals, e.g. in time domain, e.g. with first audio data.

The first, second and/or third parts used in different iterations and/or different steps do not have to be identical but it is preferred to have them identical in each iteration and/or repetition and/or iteration of one step. It is even preferred to use only one set of first, second and/or third parts, especially time intervals per step including a combination or mixture in each throughout all iterations. It is even preferred to use only one set of first, second and/or third parts, especially time intervals for all claimed steps including a combination or mixture throughout all iterations, using the one set of parts for any claimed combination and/or masking.

It is as well possible to transform the data to be combined and/or mixed prior to the combination and/or mixture by use of a transformation and, especially, transform the combined data back after the combination and/or mixture, especially by use of the inverse of the transformation used to transform prior to the combination and/or mixture. This can e.g. performed by the application of filters on the data to be combined and/or mixed. E.g. when using a time and frequency intervals as parts and combining and/or mixing in time domain one might filter the time domain data (e.g. more real data and first data) to be combined according to the time and frequency intervals into at least a first filtered data part of each data to be combined and at least one second filtered data part and/or at least one third filtered data part of each data to be combined by use of at least one transformation prior to the combination and/or mixture.

In general one might filter the data to be combined (e.g. more real data and first data) into at least one first filtered data part of each data to be combined and at least one second filtered data part of each data to be combined and/or at least one third filtered data part of each data to be combined, especially by use of at least one transformation, especially prior to the combination and/or mixture. The combination and/or mixture can be performed by combining and/or mixing of the at least one first filtered data parts, the at least one second filtered data parts and/or at least one third filtered data part, especially as described above for the first, second and/or third parts by use of first, second and/or third filtered data parts instead of the first, second and/or third parts, might be performed. Especially preferred is to use the at least one first filtered data part of one data to be combined and the at least one second filtered data part of the other data to be combined and/or to use a mixture, especially as disclosed above, of the at least one third data parts of both data to be combined.

The combination of modified magnitude data and modified phase data with the first magnitude and first phase data as new iterated magnitude and phase data can be, e.g. performed as follows: There are to be defined at least two parts of the magnitude and phase data, especially at least three parts. These parts e.g. can be defined as time and/or frequency intervals, e.g. with audio representation data and/or time and/or amplitude intervals e.g. with first audio data.

Regarding the first part the modified magnitude data and modified phase data is used. Regarding the second part the first magnitude data and first phase data is used. Regarding the third part a simplified mixture of modified and first data is used as defined above.

There might be more than one first part, more than one second part and/or more than one third part used in one step and/or iteration. It is preferred if all first parts and all second parts and all third parts together include the complete space the data to be combined is defined and/or given on..

It is preferred if, especially all at least one, first part(s) border(s) on, especially all at least one, second part(s) or if, especially all at least one, first part(s) border(s) on, especially all at least one, third part(s) while, especially all at least one, third part(s) border(s) on, especially all at least one, second part(s).

It is especially preferred if, especially all at least one, first part(s) is/are at least partially and/or fully surrounded by at least one second part and/or at least one third part. It is especially preferred if, especially all at least one, third part(s) is/are at least partially and/or fully surrounded by at least one second part.

It is especially preferred to use a third part that is constructed by a dilation of the first part, especially by a dilation by a disk, minus the first part.

It is especially preferred if the parts provide sharp boarders and do not overlap.

Every combination or masking in this application can be performed as described above by use of the data to be combined instead of fist magnitude data and first phase data and modified magnitude data and modified phase data.

The substitution might be performed as follows

| Option | Source 1 | Source 2 | result |
|---|---|---|---|
| 1 | fist magnitude and phase data | modified magnitude data and modified phase data | new iterated magnitude and phase data |
| 2 | more real data | transformation of the first magnitude and first phase data | new data |
| 3 | modified magnitude and modified phase data | first magnitude and first phase data | new iterated magnitude and iterated phase data |

In cases this application teaches to use, e.g. in a combination, as well other data in the same way, e.g. as denoted in the above table, this has to be performed in a way exchanging as well references to the data, e.g. when refereeing to a space and/or subset the data is given on.

In another alternative a combination of the more real data with a transformation, especially the same transformation used in step 1 and/or the inverse of the first transformation, of the first magnitude and first phase data is used as new data and the new data is transformed generating new iterated magnitude and new iterated phase data.

This can, again be performed by using of at least one first and at least one third part or by use of at least one first and at least one second part or by use of at least one first, at least one third and at least one second part, defined as above but on the more real data and the transformation, especially the same transformation used in step 1 and/or the inverse of the first transformation, of the first magnitude and first phase data.

When the looping of step b is finished, step c is performed to transfer the iterated magnitude and phase data to generate modified audio data in the first domain. The iterated magnitude and phase data used here for the transformation is the one generated in step b, especially the new iterated magnitude and phase data generated in step 3 or step 3a during the last loop pass of step b.

The transformation can be any transformation as described above, e.g. in regard to the transformation in step a. It is preferred to use a transformation that is the inverseof the transformation used in step a and/or b.ii.3.It is preferred to use at least one modification, modification transform or convolution kernel for modifying the magnitude and phase data to obtain modified magnitude and phase data in step i. It is especially preferred to use a modification or convolution kernel that is defined by at least one partial differential equation. Furthermore, it is preferred to use a modification defined by at least one partial differential equation which is representing a diffusion of a physical model. Such models can, for example, be such regarding temperature in solid matter, liquids or gases or concentrations in liquids or gases. For example, the Fourier Heat Equations might be used. Other physical models are possible such as salt concentration in water, atmospheric pressure in a closed environment, and so on. They might be further modified, especially to be anisotropic.

Therefore, it is especially preferred to use partial differential equations representing a diffusion of a physical model, but being modified to be anisotropic.

It is further or alternatively preferred to use a modification defined by at least one tensor or by at least one tensor field. It is further preferred that the at least one tensor or at least one tensor field is defined by an, especially consecutive, iteration step of a gradient algorithm, the gradient algorithm being one minimizing a functional defined over the first audio data or the iterated magnitude and phase data. Such a tensor or tensor field could be a tensor function or could include a tensor for each data point of the iterated magnitude and phase data.

Alternatively, or even further it is preferred to perform the modifying of the iterated magnitude and phase data in step b.i by applying an, especially consecutive, iteration step of a gradient algorithm, the gradient algorithm being one minimizing a functional defined over the first audio data or iterated magnitude and phase data. The functional could be a metric.

In general, it is preferred to perform the modifying of the iterated magnitude and phase data in step b.i anisotropically.

It is further preferred to include the step of acquiring the first audio data by digitalization of a sound, which, for example, could be performed by recording the sound, for example with a microphone, and digitization of the recording. Alternatively, it is preferred to acquire the first audio data by processing or modifying audio data, for example generated by a synthesizer or by acquiring a natural sound, for example by digitizing the recording of a sound.

Regarding another aspect of the invention, the invention consists of audio processing device including at least one processor and at least one memory to store first audio data, the device is arranged to process the first audio data according to one of the claims 1 to 14 using the at least one processor to perform the steps a to c, especially the transformations and modifications defined. The audio processing device might include a program able to perform the steps of the method according one of the claims 1 to 14 using the at least one processor. The audio processing device might include means for recording audio and/or generating or modifying audio data, it might especially include a microphone and/or digitization means, like a sound card, to digitize the microphone's signal.

In another embodiment the invention consists of server having at least one processor and at least one memory and means for receiving or recording digital audio data as first audio data, wherein the at least one memory is configured to store the first audio data or parts or blocks of the first audio data and/or the processor is configured to perform the method according to any one of the claims 1 to 14 on the first audio data. The means for receiving might consist of an interface to receive audio data. e.g. a Steinberg interfaces, e.g. one or more of the UR Series (UR12, UR22mkll, UR242, UR44, UR28M, UR824), especially via the Internet or Ethernet, e.g. Dante Networks, especially Dante Interface and/or a web-based interface for example a webpage to upload the first audio data.

In the following the invention shall be described further but without any limitation on the scope by use of the drawings that are only schematic and show

Fig. 1 a representation of audio data in waveform with a dropout

Fig. 2 a representation of audio data in waveform with a reconstruction of the dropout

Fig. 3 spectrograms of the audio data of figure 1 and figure 2

Fig. 4 a representation of the audio data of Fig. 1 in waveform (with a dropout)

Fig. 5 a representation of audio data in waveform with a reconstruction of the dropout according to the invention

Fig. 6 spectrograms of the audio data figure 3 and figure 4

Fig. 7 schematic representation of the steps of the invention

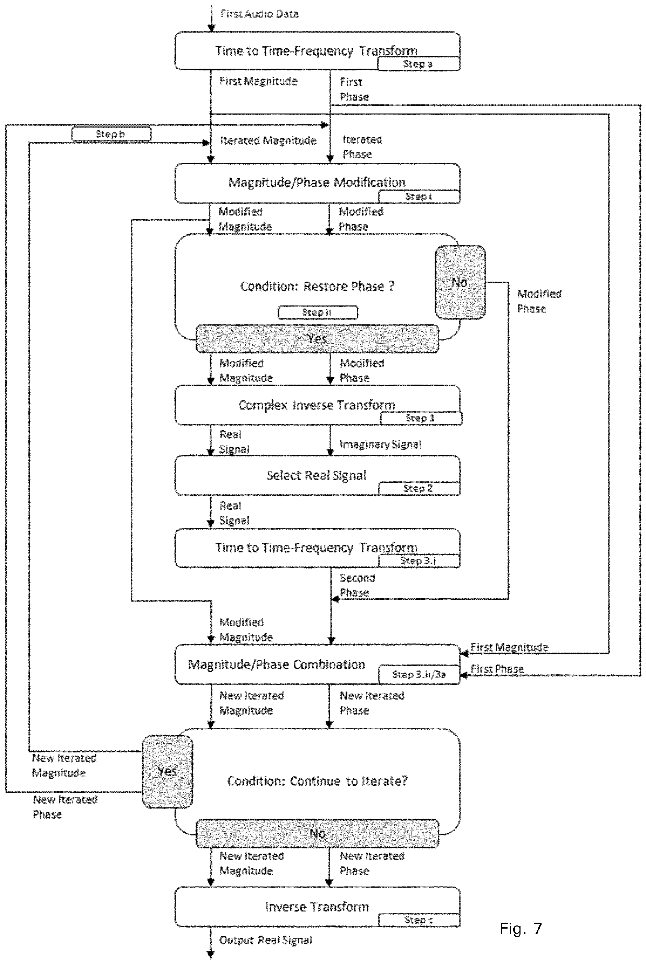

Fig. 7 provides a schematic representation of the steps of the invention.

In one aspect, the invention may comprise an audio processing device that includes at least one processor and at least one memory to store first audio data. The audio processing device may be arranged and specially programmed to modify and transform the first audio data in accordance with the method set out in the flow chart of Fig. 7. The steps of the method shown in Fig. 7, particularly the transformations and modifications, may be performed using at least one specially programmed processor in the audio processing device. The audio processing device may further comprise means for recording audio and/or generating or modifying audio data and may therefore include a microphone and/or a digitization means, like a sound card, to digitize the microphone's signal.

In another aspect, the invention may comprise a server having at least one processor and at least one memory and means for receiving or recording digital audio data as first audio data; wherein the at least one processor and at least one memory is specially configured and programmed to store the first audio data or parts or blocks of the first audio data and/or the processor is specially configured and programmed to perform the method illustrated in the flow chart of Fig. 7 on the first audio data. The means for receiving might comprise an interface to receive audio data, e.g. Steinberg interfaces, e.g. one or more of the UR Series (UR12, UR22mkll, UR242, UR44, UR28M, UR824), especially via the Internet or Ethernet, e.g. Dante Networks, especially Dante Interface and/or a web-based interface for example a webpage to upload the first audio data.

It is further preferred to include the step of acquiring the first audio data by digitalization of a sound, which, for example, could be performed by recording the sound, for example with a microphone, and digitization of the recording. Alternatively, it is preferred to acquire the first audio data by processing or modifying audio data, for example generated by a synthesizer or by acquiring a natural sound, for example by digitizing the recording of a sound.

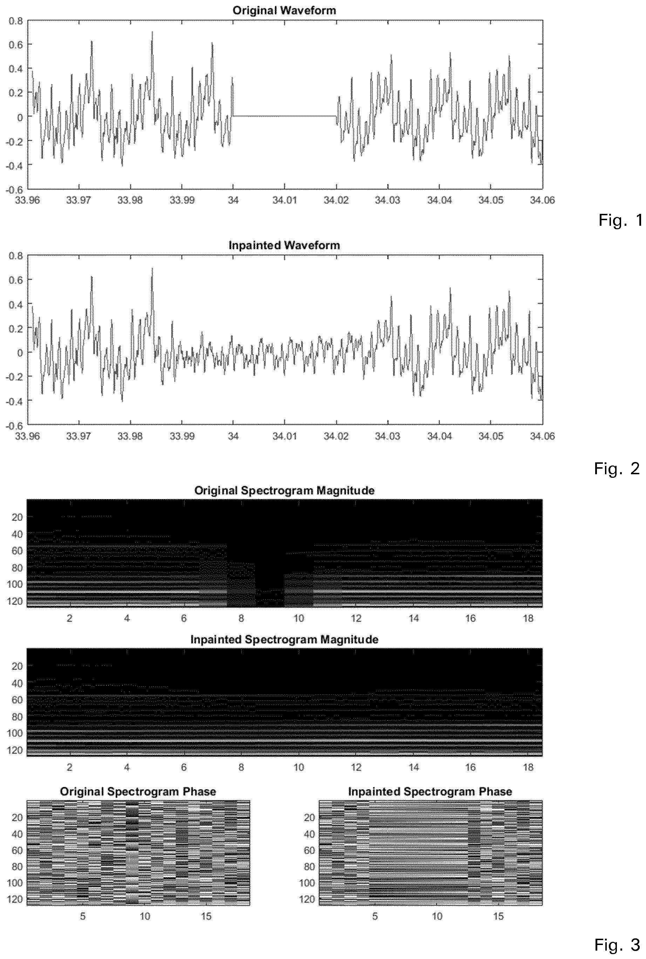

Fig.1 shows a waveform representation of the song "Michelle" from the Beatles (Original CD Version) in Mono 44100Hz/16bit, the time range is between 33.961 and 34.060 seconds, the drop out (flat horizontal line) of 20ms starts at 34.000. The spectrogram generated by a Short Time Fourier Transform (transformation to time-frequency domain) with a Hamming window of 1024 samples and a hop of 256 samples is shown in Fig. 3 as original spectrogram magnitude and original spectrogram phase. The complex spectrogram has been divided in Magnitude and Phase spectrograms that are depicted in Fig. 3. The Magnitude spectrograms correspond to absolute value of the complex data and the Phase spectrograms correspond to angle value of the complex data. One Magnitude and one Phase spectrogram together correspond to complex data.

Audio data in the time domain is represented with real numbers while the spectrum of audio data as well as time frequency domain audio data is represented with complex numbers (because the spectrum includes both a magnitude component and a phase component).

Then, to show the effect of the invention and with reference to Figure 7, the spectrogram data has been first processed by the following process, corresponding, together with the described transformation, to processing first audio data by the following steps:

a. transforming the first audio data, especially time-domain audio data, using a first transformation generating time-frequency domain audio representation data, especially spectrogram data, having first magnitude and first phase data and using first magnitude and first phase data as first iterated magnitude and first iterated phase data are initialized to first magnitude and first phase data

b. iteratively changing the data by looping the following steps:

i. modifying the iterated magnitude and phase data to obtain modified magnitude and phase data

ii.3a. using a combination of
the modified magnitude and phase data with the first magnitude and phase data as new iterated magnitude and phase data

c. transforming the iterated magnitude and phase data to generate modified audio data.

The iterative process of projected regularization (step b.i) and combination (Step b.ii.3a) is processed in both spectrograms (as original spectrogram magnitude and original spectrogram phase). After several iterations, an Inverse Fourier Transform of the magnitude/phase spectrogram is processed in order to recover audio data. Other transforms such as Constant-Q Transform are also possible to convert between time domain and time-frequency domain.

The modification or regularization used in step b.i. (Fig. 7) is derived from the physical Model Fourier Heat Equation such as:

$$\frac{dI}{dt} - \alpha \left( \frac{d^2I}{dx^2} + \frac{d^2I}{dy^2} + \frac{d^2I}{dz^2} \right) = 0$$

It was modified to make the model anisotropic by introducing a second thermal diffusivity coefficient, and applied to the special 2-dimension case:

$$\frac{dI}{dt} - \alpha \frac{d^2I}{dx^2} - \beta \frac{d^2I}{dy^2} = 0$$

According to the Taylor formula, this develops to the following approximation:

$$I(x+h,y+l) = I(x,y) + h*\frac{dI}{dx} + l*\frac{dI}{dy} + \frac{h^2}{2}*\frac{d^2I}{dx^2} + \frac{l^2}{2} + \frac{d^2I}{dy^2} + h*l*\frac{d^2I}{dx*dy}$$

By injecting using the four following values of (h,l) = (1,0) ; (-1,0) ; (0,1) ; (0,-1) and injecting it into the anisotropic model, one obtains:

$$I(x,y,t+1) - I(x,y,t)$$
$$= \alpha*\big(I(x+1,y,t) + I(x-1,y,t) - 2*I(x,y,t)\big) + \beta$$
$$*\big(I(x,y+1,t) + I(x,y-1,t) - 2*I(x,y,t)\big)$$

This is equivalent to the following matrix operation:

$$I(t+1) = I(t) \otimes K$$

*with*

$$K = \begin{pmatrix} 0 & \beta & 0 \\ \alpha & -2*\alpha - 2*\beta & \alpha \\ 0 & \beta & 0 \end{pmatrix}$$

K is a tensor function or convolution kernel that is used in every loop pass. One could, by entering different values for $\alpha$ and $\beta$, generate a tensor field for each loop pass, having a tensor for each data point.

Each iteration of this (modified) physical model will generate modified magnitude data (modified magnitude spectrogram) and modified phase data (modified phase spectrogram) using the same regularization or modification process once on the magnitude data (magnitude spectrogram) and once on the phase data (phase spectrogram).

This modified magnitude data and modified phase data is combined with the first magnitude and first phase data as new iterated magnitude and phase data by the use of a binary mask here. The area covering the dropout of 20 ms beginning at 34 seconds (first part, from 34,00 seconds to 34,02 seconds) is fully inpainted/reconstructed by the use of the modified magnitude and modified phase data. Outside that (outside of the first part) (second part, between 33.961 and 34,00 as well as between 34,02 and 34.060 seconds) first magnitude data and first phase data where used, providing for no alternation of the first audio data in this second part (step b.ii.3a - Fig. 7) . In this example a part with a mixture (third part) was not used. In this case combination was performed by use of a binary mask.

The combination/mixture of modified magnitude data and modified phase data with the first magnitude and first phase data as new iterated magnitude and phase data can be performed by using at least one part of the modified magnitude data and modified phase data and at least one part of the first magnitude and first phase data as new iterated magnitude and phase data. The new iterated magnitude and phase data is used for the next loop pass or iteration. 200 loop passes (of steps b.i and b.ii.3a - Fig. 7) were performed. At the end of the looping the (last) new iterated magnitude and phase data is transformed (step c - Fig. 7) to the time domain using the inverse of the first transformation used in step a of Fig. 7. A waveform representation of this modified audio data is shown in Fig. 2.

Fig. 3 shows the result of the last loop pass, the last new first modified magnitude and phase data as "Inpainted magnitude spectrogram" and "Inpainted phase spectrogram".

To these spectrograms the metric known as STFT consistency (equation 3 from paragraph 6.1. of Nicolas Sturmel, Laurent Daudet, "signal reconstruction from as STFT magnitude: a state of the art", see above) was applied by summing the magnitudes of the elements of the obtained matrix, resulting in an acceptable metric value of 2700.

This metric provides a measurement to examine the consistency of STFT converted audio data or how natural and/or realistic an audio playback of audio data will sound. The smaller the metric value, the better is the consistency.

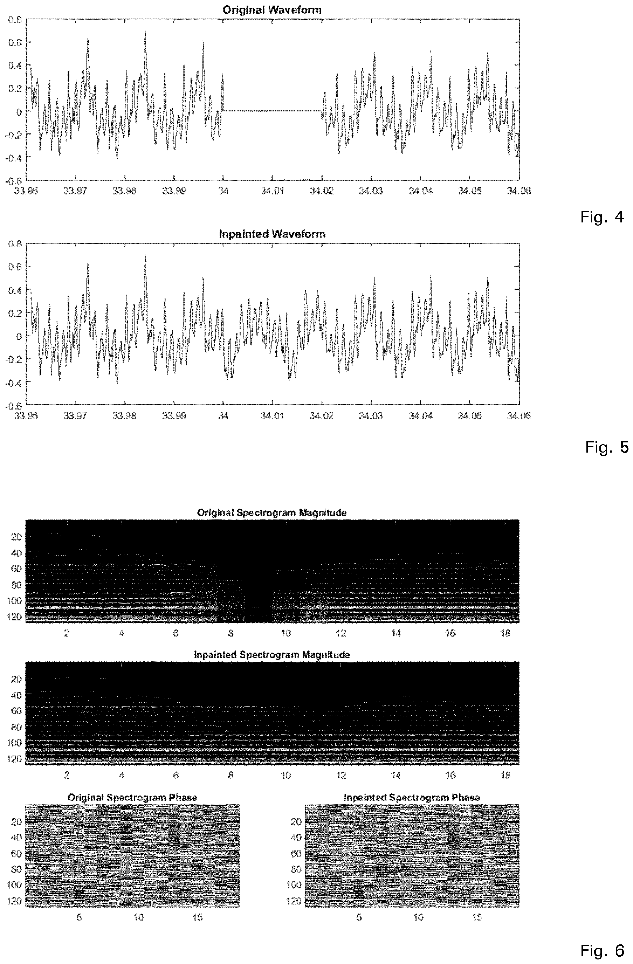

Nearly the same process as described above was applied to the same first audio data with the only difference that the inventive steps 1 to 3 (Fig. 7) were performed instead of step 3a in every of the 200 loop passes (now steps b.i, b.ii.1, b.ii.2 and b.ii.3 in every loop pass - Fig. 7). This was done using the same transformation in step 3 as in step a and the same transformation in step 1 as in step c. Step 2 was performed by stripping away any imaginary part. The waveform representation of the first audio data is again shown in Fig. 4 (same as Fig. 1) while the waveform representation of the modified audio data is shown in Fig. 5.

Spectrograms of the first magnitude and phase data are shown in Fig. 6 as original magnitude spectrogram and original phase spectrogram while the representations of last new iterated magnitude and phase data are shown as "Inpainted magnitude spectrogram" and "Inpainted phase spectrogram".

Applying the same metric as before to this last new iterated magnitude and phase data results in a metric value of 490.

Generating of the second phase data used inside the in-painting process might be summarized as

```
: angle(STFT(real(iSTFT(complexSpectrogram))))
```

Figure 7 shows an exemplary flow chart of the inventive method that can for example be implemented in a software program based on this flow chart which can be used to specially program a computer, server or a CPU to execute the program. At the top of the flowchart first audio data is supplied to the process and, in step a, transformed from time domain to time frequency domain. As example time domain audio data is supplied and therefore the first audio data is transformed from time domain to time frequency domain, for example using STFT transformation. Therefore Fig.7 denotes this step as Time to time-frequency transform. In general this step is constituted by a transformation from the domain of the first audio data to time-frequency domain. This generates time-frequency domain audio representation data, having first magnitude data and first phase data. The time-frequency domain audio representation data is the same as transformed first audio data. It should be noted that in some instances in Fig. 7 the word "data" is omitted for clarity of illustration. So for example the term "first magnitude" refers to "first magnitude data".

For step b, to iteratively changing the transformed first audio, first magnitude data and first phase data will be initialized to iterated magnitude data and iterated phase data for the start of the looping. Magnitude data and phase data together are complex data, e.g. first complex data consists of first magnitude data and first phase data. Step i and step ii are substeps of step b. Iterated magnitude data and iterated phase data will be modified in step i. This will generate modified magnitude data and modified phase data. Within step ii., a decision is taken whether to perform the phase restoration steps 1 to 3 or to skip them and instead use step 3a; all being substeps of step ii. One loop pass includes the steps b.i and b.ii, including b.ii.1, b.ii.2 and b.ii.3 or b.ii.3a.

At least every fifth loop pass steps 1 to 3 are performed. Whether steps 1 to 3 or step 3a is/are performed is decided in the" condition: restore phase?" decision module. At least every $5^{th}$ loop pass the decision is yes. But the decision might include further aspects like the quality of data or changes performed during the last yes-decision, or specify any other relation of yes:no smaller than 5:1. When performing steps 1 to 3 (after a yes-decision), a transformation or complex inverse transform is performed on the modified magnitude data and modified phase data to generate the complex audio data, especially real signal data and an imaginary signal data (in Fig. 7 called real signal and imaginary signal).

In step 2 the signal or data is made more real, in this example the imaginary part is stripped away in step 2. As the imaginary part is just stripped away in this example the step is denoted as "select real signal" which is a special way of calculating more real data. The more real data, in this example only the real signal data is used in step 3, in Fig. 7 in step 3.i. Fig. 7 shows step 3 divided in subsubsteps 3.i and 3.ii for better graphical representation as step 3.ii corresponds to step 3a. When transferring the data from time domain to time frequency domain in step 3.i by the transformation, for example a STFT transformation the more real data is used. In step 3.ii a combination of first magnitude and first phase data on one hand and modified magnitude and second phase on the other hand is generated, for example by use of a binary mask and the result is used as new iterated magnitude and new iterated phase data for the next loop pass or the processing in step c.

If phase restoration steps 1 to 3 are not performed in a loop pass, step 3a is performed (after a no-decision in the "condition: phase restore? Condition" module) instead to generate new iterated magnitude data and new iterated phase data by combining first magnitude and first phase data with modified magnitude and modified phase data, for example by use of a binary mask.

If the looping is finished is decided in the "Condition: Continue to Iterate?" module. This decision can be based on various aspects, e.g. it can just take into account the number of loop passes and take a yes-decision as long as the number of loop passes is not reached and a no-decision if the number is reached.

When the looping continued (yes-decision in the "Condition: Continue to Iterate?" module) the last new iterated magnitude and last new iterated phase data (result of step 3.ii or 3a), those from the last loop pass just finished, are used in step b for the next loop pass as new iterated magnitude and new iterated phase data to going on with iteratively changing the transformed first audio data.

When the looping is finished (no-decision in the "Condition: Continue to Iterate?" module) the last new iterated magnitude and last new iterated phase data (result of step 3.ii or 3a), those from the last loop pass just finished, are used in step c to generate modified audio data by transforming the last new iterated magnitude and last new iterated phase data, especially into time domain (inverse Transform). The modified audio data can be used to generate a real output signal, for example a playback of the modified audio data.

This method can be implemented e.g. using the following Matlab® code. Not defined variables are constants that can be initialized by a person skilled in the art and might differ depending on the first audio data to process and the desired outcome. The numbering in the comments relates to the claimed features and the comments relate to the naming of Fig. 7. The "outputRealSignal" at the end of the code relates top the modified audio data.

```
function [outputRealSignal] = InpaintingAlgo(firstAudioData, fs,
inpaintingMask)
%% Step a - Time to Time-Frequency Transform
firstSpectrogram = stft(firstAudioData, wlen, hop, wlen, fs);
firstMagnitude = abs(firstSpectrogram). *abs(1-inpainting Mask);
firstPhase = angle(firstSpectrogram).* abs(1-inpainting Mask);
%% Initialize Iteration
iteratedMagnitude = firstMagnitude;
iteratedPhase = firstPhase;
% Generate Convolution Kernel
convolutionKernel = [0 blurFrequency 0;
          blurTime (-2*blurTime-2*blurFrequency) blurTime;
          0 blurFrequency 0];
          % Iterate by looping
          for ite = 1 iterations
    %% Step b.i - Magnitude/Phase Modification
    modifiedMagnitude=iteratedMagnitude+speedValue*conv2(iteratedMagnitude,
    convolution Kernel,'same');
    modifiedPhase=iteratedPhase+speedValue*conv2(iteratedPhase,
    convolution Kernel,'same');
    % Step b.ii - Condition: Restore Phase?
    if restorePhase
       % Step b.ii. 1 - Complex Inverse Transform
       [complexSignal, ~] = istft(modifiedMagnitude.*exp(1i*modifiedPhase),
       hop, wlen, fs);
       % Step b.ii.2 - Select Real Signal
       realSignal = real(complexSignal);
       % Step b.ii.3.i - Time to Time-Frequency Transform
       [secondSpectrogram, ~, ~] = stft(realSignal, wlen, hop, wlen, fs);
     secondPhase =angle(secondSpectrogram);
    else
       %% Step b.ii.3a
     secondPhase =modifiedPhase;
    end
    %% Step b.ii.3.ii/b.ii.3a(continued) - Magnitude/Phase Combination
    newIteratedMagnitude = firstMagnitude + (inpaintingMask. *modified Magnitude);
    newIteratedPhase = firstPhase + (inpaintingMask. *secondPhase);
    iteratedMagnitude = newIteratedMagnitude;
    iteratedPhase = newIteratedPhase;
    end
    %% Step c - Inverse Transform
    outputRealSignal = istft(iteratedMagnitude.*exp(1i*iteratedPhase), hop,
    wlen, fs);
    end
```

The stft and the istft are defined by the Short-Time Fourier Transformation and inverse Short-Time Fourier Transformation by Hristo Zhivomirov of August 5, 2015 to be found at the German website of:

```
mathworks.com/matlabcentral/fileexchange/45577-inverse-short-time-fourier-
transformation--istft--with-matlab-implementation.
```

Copyright (c) 2015, Hristo Zhivomirov - All rights reserved.

Redistribution and use in source and binary forms, with or without modification, are permitted provided that the following conditions are met:

* Redistributions of source code must retain the above copyright notice, this list of conditions and the following disclaimer.
* Redistributions in binary form must reproduce the above copyright notice, this list of conditions and the following disclaimer in the documentation and/or other materials provided with the distribution

THIS SOFTWARE IS PROVIDED BY THE COPYRIGHT HOLDERS AND CONTRIBUTORS "AS IS" AND ANY EXPRESS OR IMPLIED WARRANTIES, INCLUDING, BUT NOT LIMITED TO, THE IMPLIED WARRANTIES OF MERCHANTABILITY AND FITNESS FOR A PARTICULAR PURPOSE ARE DISCLAIMED. IN NO EVENT SHALL THE COPYRIGHT OWNER OR CONTRIBUTORS BE LIABLE FOR ANY DIRECT, INDIRECT, INCIDENTAL, SPECIAL, EXEMPLARY, OR CONSEQUENTIAL DAMAGES (INCLUDING, BUT NOT LIMITED TO, PROCUREMENT OF SUBSTITUTE GOODS OR SERVICES; LOSS OF USE, DATA, OR PROFITS; OR BUSINESS INTERRUPTION) HOWEVER CAUSED AND ON ANY THEORY OF LIABILITY, WHETHER IN CONTRACT, STRICT LIABILITY, OR TORT (INCLUDING NEGLIGENCE OR OTHERWISE) ARISING IN ANY WAY OUT OF THE USE OF THIS SOFTWARE, EVEN IF ADVISED OF THE POSSIBILITY OF SUCH DAMAGE.

istft.m:

```
xlen = nfft + (coln-1)*h;
x = zeros(1, xlen);

% form a periodic hamming window
win = hamming(nfft, 'periodic');

% perform IFFT and weighted-OLA
if rem(nfft, 2)                 % odd nfft excludes Nyquist point
    for b = 0:h:(h*(coln-1))
        % extract FFT points
        X = stft(:, 1 + b/h);
        X = [X; conj(X(end:-1:2))];

        % IFFT
        xprim = real(ifft(X));

        % weighted-OLA
        x((b+1):(b+nfft)) = x((b+1):(b+nfft)) + (xprim.*win)';
    end
else                            % even nfft includes Nyquist point
    for b = 0:h:(h*(coln-1))
        % extract FFT points
        X = stft(:, 1+b/h);
        X = [X; conj(X(end-1:-1:2))];

        % IFFT
        xprim = real(ifft(X));

        % weighted-OLA
        x((b+1):(b+nfft)) = x((b+1):(b+nfft)) + (xprim.*win)';
    end
end
```

```
W0 = sum(win.^2);              % find W0
x = x.*h/W0;                   % scale the weighted-OLA

% calculate the time vector
actxlen = length(x);           % find actual length of the signal
t = (0:actxlen-1)/fs;          % generate time vector

end
```

----------------------------------------------------------------------------------------------------

```
stft.m:
% represent x as column-vector if it is not
if size(x, 2) > 1
    x = x';
end

% length of the signal
xlen = length(x);

% form a periodic hamming window
win = hamming(wlen, 'periodic');

% form the stft matrix
rown = ceil((1+nfft)/2);       % calculate the total number of rows
coln = 1+fix((xlen-wlen)/h);    % calculate the total number of columns
stft = zeros(rown, coln);      % form the stft matrix

% initialize the indexes
indx = 0;
col = 1;

% perform STFT
while indx + wlen <= xlen
    % windowing
    xw = x(indx+1:indx+wlen).*win;

    % FFT
    X = fft(xw, nfft);

    % update the stft matrix
    stft(:, col) = X(1:rown);

    % update the indexes
    indx = indx + h;
    col = col + 1;
end
```

```
% calculate the time and frequency vectors
t = (wlen/2:h:wlen/2 + (coln-1)*h)/fs;
f = (0:rown-1)*fs/nfft;

end
```
--------------------------------------------------------------------------------------------------------
```
Resynthesis.m:
clear, clc, close all

% music program (stochastic non-stationary signal)
[x, fs] = wavread('track.wav');
x = x(:, 1);
xmax = max(abs(x));
x = x/xmax;

% signal parameters
xlen = length(x);
t = (0:xlen-1)/fs;

% define analysis and synthesis parameters
wlen = 1024;
h = wlen/4;
nfft = wlen;

% perform time-frequency analysis and resynthesis of the original signal
[stft, f, t_stft] = stft(x, wlen, h, nfft, fs);
[x_istft, t_istft] = istft(stft, h, nfft, fs);

% plot the original signal
figure(1)
plot(t, x, 'b')
grid on
xlim([0 max(t)])
ylim([-1.1 1.1])
set(gca, 'FontName', 'Times New Roman', 'FontSize', 14)
xlabel('Time, s')
ylabel('Normalized amplitude')
title('Original and reconstructed signal')

% plot the resynthesized signal
hold on
plot(t_istft, x_istft, '-.r')
legend('Original signal', 'Reconstructed signal')
```

--------------------------------------------------------------------------------------------------------
```
Windowchoice.m:
clear, clc, close all
```

```
wlen = 64;                    % window length (recomended to be power of
2),  choose it!
h = wlen/4;                   % hop size (recomended to be power of
2),      choose it!
k = 5*wlen;                   % overlap-add span
win = hamming(wlen, 'periodic');   %
window,                              choose it!
s = zeros(k, 1);

for k = 0:h:k-wlen
    indx = k+1:k+wlen;        % current window location
    s(indx) = s(indx) + win.^2;   % window overlap-add
    winp(indx) = win;             % for plot only
    plot(winp, 'ok')              % plot just this window
    hold on
end

WO = sum(win.^2);             % find WO
s = h*s/WO;                   % scale the window overlap-add
stem(s, 'r');                 % plot window overlap-add
```

**Claims**

1. A method to process first audio data in a first domain by

   a. transforming the first audio data, especially time-domain audio data, using a first transformation generating time-frequency domain audio representation data, especially spectrogram data, having first magnitude and first phase data and using first magnitude and first phase data as first iterated magnitude and first iterated phase data initialized to first magnitude and first phase data (step a)
   b. iteratively changing the iterated magnitude and iterated phase data by looping the following steps (step b):

      i. modifying, especially regularizing, the iterated magnitude and iterated phase data to obtain modified magnitude and modified phase data (step i)
      **characterized by**
      ii. at least in every 5th loop pass performing the following phase restoration steps

         1. transforming the modified magnitude and modified phase data to generate complex data, especially complex time-domain data (step 1)
         2. calculating more real data from the complex data (step 2) whose real part is, compared to the complete complex value, higher than before and/or whose imaginary part is reduced
         3. transforming the more real data generating second phase data, in the time-frequency domain, (step 3.i) and
         using a combination of the modified magnitude and second phase data with the first magnitude and first phase data (step 3.ii) as new iterated magnitude and new iterated phase data or
         using a combination of the more real data with a transformation of the first magnitude and first phase data as new data and transforming the new data generating new iterated magnitude and new iterated phase data
         and in every other loop pass
         3a. using a combination of the modified magnitude and modified phase data with the first magnitude and first phase data as new iterated magnitude and iterated phase data (step 3a)

c. transforming the iterated magnitude and iterated phase data to
generate modified audio data in the first domain (step c).
wherein the combination of the modified magnitude and second phase data with the first magnitude and first phase data (step 3.ii) is performed

by dividing the modified magnitude and second phase data in at least one first and at least one second part and dividing the first magnitude and first phase data in at least one first and at least one second part and use of the at least one first part of the modified magnitude and second phase data and the at least one second part of the first magnitude and first phase data as new iterated magnitude and new iterated phase data or

by dividing the modified magnitude and second phase data in at least one first and at least one third part and dividing the first magnitude and first phase data in at least one first and at least one third part and use of the at least one first part of the modified magnitude and second phase data and a mixture of the at least one third part of the first magnitude and first phase data and the at least one third part of the modified magnitude and second phase data as new iterated magnitude and new iterated phase data or

by dividing the modified magnitude and second phase data in at least one first and at least one third part and dividing the first magnitude and first phase data in at least one first and at least one third part and use of the at least one first part of the first magnitude and first phase data and a mixture of the at least one third part of the first magnitude and first phase data and the at least one third part of the modified magnitude and second phase data as new iterated magnitude and new iterated phase data or

by dividing the modified magnitude and second phase data in at least one first and at least one second part and at least one second part and at least one third part and dividing the first magnitude and first phase data in at least one first and at least one second part and at least one third part and use of the at least one first part of the first magnitude and first phase data and of the at least one second part of the modified magnitude and second phase data and a mixture of the at least one third part of the first magnitude and first phase data and the at least one third part the at least one second part of the modified magnitude and second phase data as new iterated magnitude and new iterated phase data

and the combination of more real data with a transformation of the first magnitude and first phase is performed

by dividing the more real data in at least one first and at least one second part and dividing the transformation of the first magnitude and first phase data in at least one first and at least one second part and use of the at least one first part of the more real data and the at least one second part of the transformation of the first magnitude and first phase data as new data or

by dividing the more real data in at least one first and at least one third part and dividing the transformation of the first magnitude and first phase data in at least one first and at least one third part and use of the at least one first part of the more real data and a mixture of the at least one third part of the transformation of the first magnitude and first phase data and the at least one third part of the more real data as new data or

by dividing the more real data in at least one first and at least one third part and dividing the transformation of the first magnitude and first phase data in at least one first and at least one third part and use of the at least one first part of the transformation of the first magnitude and first phase data and a mixture of the at least one third part of the transformation of the first magnitude and first phase data and the at least one third part of the more real data as new data or

by dividing the more real data in at least one first and at least one second part and at least one second part and at least one third part and dividing the transformation of the first magnitude and first phase data in at least one first and at least one second part and at least one third part and use of the at least one first part of the transformation of the first magnitude and first phase data and of the at least one second part of the more real data and a mixture of the at least one third part of the transformation of the first magnitude and first phase data and the at least one third part the at least one second part of the more real data as new data

and the combination of the modified magnitude and modified phase data with the first magnitude and first phase data (step 3a) is performed

by dividing the modified magnitude and modified phase data in at least one first and at least one second part and dividing the first magnitude and first phase data in at least one first and at least one second part and use of the at least one first part of the modified magnitude and modified phase data and the at least one second part of the first magnitude and first phase data as new iterated magnitude and iterated phase data or

by dividing the modified magnitude and modified phase data in at least one first and at least one third part and dividing the first magnitude and first phase data in at least one first and at least one third part and use of the at least one first part of the modified magnitude and modified phase data and a mixture of the at least one third part of the first magnitude and first phase data and the at least one third part of the modified magnitude and modified phase data as new iterated magnitude and iterated phase data or by dividing the modified magnitude and modified phase data in at least one first and at least one third part and dividing the first magnitude and first phase data in at least one first and at least one third part and use of the at least one first part of the first magnitude and first phase data and a mixture of the at least one third part of the first magnitude and first phase data and the at least one third part of the modified magnitude and modified phase data as new iterated magnitude and iterated phase data or

by dividing the modified magnitude and modified phase data in at least one first and at least one second part and at least one second part and at least one third part and dividing the first magnitude and first phase data in at least one first and at least one second part and at least one third part and use of the at least one first part of the first magnitude and first phase data and of the at least one second part of the modified magnitude and modified phase data and a mixture of the at least one third part of the first magnitude and first phase data and the at least one third part the at least one second part of the modified magnitude and modified phase data as new iterated magnitude and iterated phase data.

2. A method according to claim 1 wherein steps 1 to 3 are performed in every processing of the looping steps i and ii and step 3a is not performed.

3. A method according to any of the preceding claims, wherein the first transformation is used for transforming in step 3.

4. A method according to any of the preceding claims, wherein the first transformation is a short-time Fourier transform (STFT) or a Constant-Q Transform.

5. A method according to any of the preceding claims, wherein transforming in step 1 and/or step c is performed by an inverse of the first transformation.

6. A method according to any of the preceding claims, wherein calculating more real data from the complex data in step 2 is performed by calculation real data by discarding the imaginary part.

7. A method according to any of the preceding claims, wherein modifying the magnitude and phase data to obtain modified magnitude and phase data in step i is performed using a modification, especially defined by at least one partial differential equation, especially such representing a diffusion of a physical model, or especially defined by at least one tensor or by at least one tensor field or especially defined by an, especially consecutive, iteration step of a gradient algorithm, the gradient algorithm being one minimizing a functional defined over the first audio data or the iterated magnitude and phase data.

8. A method according to the preceding claim 7 wherein each of the at least one tensor field is constituted by one tensor function or each tensor is constituted by one tensor function or convolution kernel.

9. A method according to any of the preceding claims, wherein each modifying of the iterated magnitude and phase data to obtain modified magnitude and phase data in step i is performed by applying an, especially consecutive, iteration step of a gradient algorithm, the gradient algorithm being one minimizing a functional defined over the first audio data or iterated magnitude and phase data.

10. A method according to any of the preceding claims 7 to 9, wherein the modification is anisotropic.

11. A method according to any of the preceding claims, wherein step 3 includes, projecting the modified magnitude data and second phase data on the first audio data or iterated magnitude and phase data and/or masking the modified magnitude data and second phase data, especially by a projection using a binary mask or transparency (alpha) mask, especially in time domain or time-frequency domain and/or wherein step 3a includes, projecting the modified magnitude and phase data on the first audio data or iterated magnitude and phase data and/or masking the modified magnitude and phase data, especially by a projection using a binary mask or transparency (alpha) mask, especially in time domain or time-frequency domain.

12. A method according to any of the preceding claims, including acquiring the first audio data by digitalization of a sound.

13. A method according to any of the preceding claims, including acquiring the first audio data by processing or modifying audio data.

14. Audio processing device including at least one processor and at least one memory to store parts and/or blocks of and/or the complete first audio data wherein the device is arranged to process the first audio data according to one of the claims 1 to 13 using the at least one processor to perform the steps a to c.


**Patentansprüche**

1. Verfahren zur Verarbeitung erster Audiodaten in einer ersten Domäne durch

a. Transformieren der ersten Audiodaten, insbesondere Zeitdomänenaudiodaten, unter Verwendung einer ersten Transformation, die Zeit-Frequenzdomänenaudiorepräsentationsdaten, insbesondere Spektrogrammdaten, mit ersten Größen- und ersten Phasendaten erzeugt, und unter Verwendung von ersten Größen- und ersten Phasendaten als erste iterierte Größen- und erste iterierte Phasendaten, die auf erste Größen- und erste Phasendaten initialisiert wurden (Schritt a)
b. iteratives Ändern der iterierten Größen- und iterierten Phasendaten durch Schleifen der folgenden Schritte (Schritt b):

i. Modifizieren, insbesondere Regularisieren, der iterierten Größen- und iterierten Phasendaten, um modifizierte Größen- und modifizierte Phasendaten zu erhalten (Schritt i)
**gekennzeichnet durch**
ii. Ausführen der folgenden Phasenwiederherstellungsschritte in mindestens jedem 5. Schleifendurchlauf

1. Transformieren der modifizierten Größen- und modifizierten Phasendaten zur Erzeugung komplexer Daten, insbesondere komplexer Zeitdomänendaten (Schritt 1)
2. Berechnen von mehr realen Daten aus den komplexen Daten (Schritt 2), deren realer Teil im Vergleich zum vollständigen komplexen Wert höher als zuvor ist und/oder deren imaginärer Teil reduziert ist
3. Transformieren der mehr realen Daten, die zweite Phasendaten erzeugen, in der Zeit-Frequenz-Domäne (Schritt 3.i) und Verwenden einer Kombination der modifizierten Größen- und zweiten Phasendaten mit den ersten Größen- und ersten Phasendaten (Schritt 3.ii) als neue iterierte Größen- und neue iterierte Phasendaten oder Verwenden einer Kombination der mehr realen Daten mit einer Transformation der ersten Größen- und ersten Phasendaten als neue Daten und Transformieren der neuen Daten, die neue iterierte Größen- und neue iterierte Phasendaten erzeugen, und in jedem zweiten Schleifendurchgang
3a. Verwenden einer Kombination der modifizierten Größen- und modifizierten Phasendaten mit den ersten Größen- und ersten Phasendaten als neue iterierte Größen- und iterierte Phasendaten (Schritt 3a)

c. Transformieren der iterierten Größen- und iterierten Phasendaten, um modifizierte Audiodaten in der ersten Domäne zu erzeugen (Schritt c),
wobei die Kombination der modifizierten Größen- und zweiten Phasendaten mit den ersten Größen- und ersten Phasendaten (Schritt 3.ii) ausgeführt wird

durch Teilen der modifizierten Größen- und zweiten Phasendaten in mindestens einen ersten und mindestens einen zweiten Teil und Teilen der ersten Größen- und ersten Phasendaten in mindestens einen ersten und mindestens einen zweiten Teil und Verwenden des mindestens einen ersten Teils der modifizierten Größen- und zweiten Phasendaten und des mindestens einen zweiten Teils der ersten Größen- und ersten Phasendaten als neue iterierte Größen- und neue iterierte Phasendaten oder
durch Teilen der modifizierten Größen- und zweiten Phasendaten in mindestens einen ersten und mindestens einen dritten Teil und Teilen der ersten Größen- und ersten Phasendaten in mindestens einen ersten und mindestens einen dritten Teil und Verwenden des mindestens einen ersten Teils der modifizierten Größen- und zweiten Phasendaten und einer Mischung aus dem mindestens einen dritten Teil der ersten Größen- und ersten Phasendaten und dem mindestens einen dritten Teil der modifizierten Größen- und zweiten Phasendaten als neue iterierte Größen- und neue iterierte Phasendaten oder
durch Teilen der modifizierten Größen- und zweiten Phasendaten in mindestens einen ersten und mindestens einen dritten Teil und Teilen der ersten Größen- und ersten Phasendaten in mindestens einen ersten und mindestens einen dritten Teil und Verwenden des mindestens einen ersten Teils der ersten Größen- und ersten Phasendaten und einer Mischung aus dem mindestens einen dritten Teil der ersten Größen- und ersten Phasendaten und dem mindestens einen dritten Teil der modifizierten Größen- und zweiten Phasendaten als neue iterierte Größen- und neue iterierte Phasendaten oder

durch Teilen der modifizierten Größen- und zweiten Phasendaten in mindestens einen ersten und mindestens einen zweiten Teil und mindestens einen zweiten Teil und mindestens einen dritten Teil und Teilen der ersten Größen- und ersten Phasendaten in mindestens einen ersten und mindestens einen zweiten Teil und mindestens einen dritten Teil und Verwenden des mindestens einen ersten Teils der ersten Größen- und ersten Phasendaten und des mindestens einen zweiten Teils der modifizierten Größen- und zweiten Phasendaten und einer Mischung aus dem mindestens einen dritten Teil der ersten Größen- und ersten Phasendaten und dem mindestens einen dritten Teil des mindestens einen zweiten Teils der modifizierten Größen- und zweiten Phasendaten als neue iterierte Größen- und neue iterierte Phasendaten,

und wobei die Kombination von mehr realen Daten mit einer Transformation der ersten Größe und ersten Phase ausgeführt wird

durch Teilen der mehr realen Daten in mindestens einen ersten und mindestens einen zweiten Teil und Teilen der Transformation der ersten Größen- und ersten Phasendaten in mindestens einen ersten und mindestens einen zweiten Teil und Verwenden des mindestens einen ersten Teils der mehr realen Daten und des mindestens einen zweiten Teils der Transformation der ersten Größen- und ersten Phasendaten als neue Daten oder

durch Teilen der mehr realen Daten in mindestens einen ersten und mindestens einen dritten Teil und Teilen der Transformation der ersten Größen- und ersten Phasendaten in mindestens einen ersten und mindestens einen dritten Teil und Verwenden des mindestens einen ersten Teils der mehr realen Daten und einer Mischung aus dem mindestens einen dritten Teil der Transformation der ersten Größen- und ersten Phasendaten und dem mindestens einen dritten Teil der mehr realen Daten als neue Daten oder

durch Teilen der mehr realen Daten in mindestens einen ersten und mindestens einen dritten Teil und Teilen der Transformation der ersten Größen- und ersten Phasendaten in mindestens einen ersten und mindestens einen dritten Teil und Verwenden des mindestens einen ersten Teils der Transformation der ersten Größen- und ersten Phasendaten und einer Mischung aus dem mindestens einen dritten Teil der Transformation der ersten Größen- und ersten Phasendaten und dem mindestens einen dritten Teil der Transformation der mehr realen Daten als neue Daten oder

durch Teilen der mehr realen Daten in mindestens einen ersten und mindestens einen zweiten Teil und mindestens einen zweiten Teil und mindestens einen dritten Teil und Teilen der Transformation der ersten Größen- und ersten Phasendaten in mindestens einen ersten und mindestens einen zweiten Teil und mindestens einen dritten Teil und Verwenden des mindestens einen ersten Teils der Transformation der ersten Größen- und ersten Phasendaten und des mindestens einen zweiten Teils der mehr realen Daten und einer Mischung aus dem mindestens einen dritten Teil der Transformation der ersten Größen- und ersten Phasendaten und des mindestens einen dritten Teils des mindestens einen zweiten Teils der mehr realen Daten als neue Daten

und wobei die Kombination der modifizierten Größen- und modifizierten Phasendaten mit den ersten Größen- und ersten Phasendaten (Schritt 3a) ausgeführt wird

durch Teilen der modifizierten Größen- und modifizierten Phasendaten in mindestens einen ersten und mindestens einen zweiten Teil und Teilen der ersten Größen- und ersten Phasendaten in mindestens einen ersten und mindestens einen zweiten Teil und Verwenden des mindestens einen ersten Teils der modifizierten Größen- und modifizierten Phasendaten und des mindestens einen zweiten Teils der ersten Größen- und ersten Phasendaten als neue iterierte Größen- und neue iterierte Phasendaten oder

durch Teilen der modifizierten Größen- und modifizierten Phasendaten in mindestens einen ersten und mindestens einen dritten Teil und Teilen der ersten Größen- und ersten Phasendaten in mindestens einen ersten und mindestens einen dritten Teil und Verwenden des mindestens einen ersten Teils der modifizierten Größen- und modifizierten Phasendaten und einer Mischung aus dem mindestens einen dritten Teil der ersten Größen- und ersten Phasendaten und dem mindestens einen dritten Teil der modifizierten Größen- und modifizierten Phasendaten als neue iterierte Größen- und iterierte Phasendaten oder durch Teilen der modifizierten Größen- und modifizierten Phasendaten in mindestens einen ersten und mindestens einen dritten Teil und Teilen der ersten Größen- und ersten Phasendaten in mindestens einen ersten und mindestens einen dritten Teil und Verwenden des mindestens einen ersten Teils der ersten Größen- und ersten Phasendaten und einer Mischung aus dem mindestens einen dritten Teil der ersten Größen- und ersten Phasendaten und dem mindestens einen dritten Teil der modifizierten Größen- und modifizierten Phasendaten als neue iterierte Größen- und iterierte Phasendaten oder

durch Teilen der modifizierten Größen- und modifizierten Phasendaten in mindestens einen ersten und mindestens einen zweiten Teil und mindestens einen zweiten Teil und mindestens einen dritten Teil und Teilen der ersten Größen- und ersten Phasendaten in mindestens einen ersten und mindestens einen zweiten Teil und mindestens einen dritten Teil und Verwenden des mindestens einen ersten Teils der ersten Größen- und ersten Phasendaten und des mindestens einen zweiten Teils der modifizierten Größen- und modifizierten Phasendaten und einer Mischung aus dem mindestens einen dritten Teil der ersten Größen- und ersten Phasendaten und dem mindestens einen dritten Teil des mindestens einen zweiten Teils der modifizierten Größen- und modifizierten Phasendaten als neue iterierte Größen- und iterierte Phasendaten.

2. Verfahren nach Anspruch 1, wobei die Schritte 1 bis 3 bei jeder Verarbeitung der Schleifenschritte i und ii ausgeführt werden und Schritt 3a nicht ausgeführt wird.

3. Verfahren nach einem der vorangehenden Ansprüche, wobei die erste Transformation zum Transformieren in Schritt 3 verwendet wird.

4. Verfahren nach einem der vorangehenden Ansprüche, wobei die erste Transformation eine Kurzzeit-Fourier-Transformation (STFT) oder eine Konstant-Q-Transformation ist.

5. Verfahren nach einem der vorangehenden Ansprüche, wobei das Transformieren in Schritt 1 und/oder Schritt c durch eine Inverse der ersten Transformation ausgeführt wird.

6. Verfahren nach einem der vorangehenden Ansprüche, wobei das Berechnen mehr realer Daten aus den komplexen Daten in Schritt 2 durch Berechnen realer Daten durch Verwerfen des imaginären Teils ausgeführt wird.

7. Verfahren nach einem der vorangehenden Ansprüche, wobei das Modifizieren der Größen- und Phasendaten, um modifizierte Größen- und Phasendaten in Schritt i zu erhalten, unter Verwendung einer Modifikation ausgeführt wird, die insbesondere durch mindestens eine partielle Differentialgleichung definiert ist, insbesondere eine solche, die eine Diffusion eines physikalischen Modells darstellt, oder insbesondere durch mindestens einen Tensor oder durch mindestens ein Tensorfeld definiert ist oder die insbesondere durch einen, insbesondere aufeinanderfolgenden, Iterationsschritt eines Gradientenalgorithmus definiert ist, wobei der Gradientenalgorithmus einer ist, der eine Funktion minimiert, die über die ersten Audiodaten oder die iterierten Größen- und Phasendaten definiert ist.

8. Verfahren nach dem vorangehenden Anspruch 7, wobei jedes des mindestens einen Tensorfeldes durch eine Tensorfunktion gebildet wird oder jeder Tensor durch eine Tensorfunktion oder einen Faltungskern gebildet wird.

9. Verfahren nach einem der vorangehenden Ansprüche, wobei jedes Modifizieren der iterierten Größen- und Phasendaten, um modifizierte Größen- und Phasendaten in Schritt i zu erhalten, durch Anwenden eines, insbesondere aufeinanderfolgenden, Iterationsschritts eines Gradientenalgorithmus ausgeführt wird, wobei der Gradientenalgorithmus einer ist, der eine Funktion minimiert, die über die ersten Audiodaten oder iterierten Größen- und Phasendaten definiert ist.

10. Verfahren nach einem der vorangehenden Ansprüche 7 bis 9, wobei die Modifikation anisotrop ist.

11. Verfahren nach einem der vorangehenden Ansprüche, wobei Schritt 3 das Projizieren der modifizierten Größendaten und zweiten Phasendaten auf die ersten Audiodaten oder iterierten Größen- und Phasendaten und/oder das Maskieren der modifizierten Größendaten und zweiten Phasendaten, insbesondere durch eine Projektion unter Verwendung einer binären Maske oder Transparenzmaske (alpha), insbesondere in Zeitdomäne oder Zeit-Frequenz-Domäne, umfasst und/oder wobei Schritt 3a das Projizieren der modifizierten Größen- und Phasendaten auf die ersten Audiodaten oder iterierten Größen- und Phasendaten und/oder das Maskieren der modifizierten Größen- und Phasendaten, insbesondere durch eine Projektion unter Verwendung einer binären Maske oder Transparenzmaske (alpha), insbesondere in Zeitdomäne oder Zeit-Frequenz-Domäne, umfasst.

12. Verfahren nach einem der vorangehenden Ansprüche, beinhaltend das Erfassen der ersten Audiodaten durch Digitalisierung eines Tons.

**13.** Verfahren nach einem der vorangehenden Ansprüche, beinhaltend das Erfassen der ersten Audiodaten durch Verarbeiten oder Modifizieren von Audiodaten.

**14.** Audioverarbeitungsvorrichtung mit mindestens einem Prozessor und mindestens einem Speicher zum Speichern von Teilen und/oder Blöcken von und/oder der vollständigen ersten Audiodaten, wobei die Vorrichtung angeordnet ist, um die ersten Audiodaten gemäß einem der Ansprüche 1 bis 13 unter Verwendung des mindestens einen Prozessors zu verarbeiten, um die Schritte a bis c auszuführen.

**Revendications**

**1.** Procédé de traitement de premières données audio dans un premier domaine consistant à:

a. transformer les premières données audio, en particulier les données audio du domaine temporel, en utilisant une première transformation générant des données de représentation audio du domaine temps-fréquence, en particulier des données de spectrogramme, ayant des données de première amplitude et de première phase et en utilisant des données de première amplitude et de première phase comme données de première amplitude itérées et de première phase itérées initialisées aux données de première amplitude et de première phase (étape a)

b. modifier de façon itérative les données de magnitude et de phase itérées en bouclant les étapes suivantes (étape b):

i. modifier, en particulier régulariser, les données de magnitude et de phase itérées pour obtenir des données de magnitude et de phase modifiées (étape i)

**caractérisé par**

ii. au moins tous les 5 passages de boucle, effectuer les étapes de restauration de phase suivantes

1. la transformation des données d'amplitude et de phase modifiées pour générer des données complexes, en particulier

2. calculer plus de données réelles à partir des données complexes (étape 2) dont la partie réelle est, par rapport à la valeur complexe complète, plus élevée qu'auparavant et/ou dont la partie imaginaire est réduite

3. transformer les données plus réelles générant des données de deuxième phase, dans le domaine temps-fréquence, (étape 3.i) et utiliser une combinaison des données d'amplitude et de deuxième phase modifiées avec les données de première amplitude et de première phase (étape 3.ii) comme nouvelle amplitude itérative et nouvelles données de phase itérative ou en utilisant une combinaison des données les plus réelles avec une transformation de la première magnitude et des données de la première phase comme nouvelles données et en transformant les nouvelles données générant une nouvelle magnitude itérative et de nouvelles données de phase itérative et dans un passage de boucle sur deux

3a. en utilisant une combinaison des données de magnitude et de phase modifiées avec les données de première magnitude et de première phase comme nouvelles données de magnitude et de phase itérées (étape 3a)

c. transformer les données de magnitude et de phase itérées pour générer des données audio modifiées dans le premier domaine (étape c).

dans lequel la combinaison des données d'amplitude et de deuxième phase modifiées avec les données de première amplitude et de première phase (étape 3.ii) est effectuée

en divisant les données d'amplitude et de deuxième phase modifiées en au moins une première et au moins une deuxième partie et en divisant les données de première amplitude et de première phase en au moins une première et au moins une deuxième partie et en utilisant ladite au moins une première partie des données d'amplitude et de deuxième phase modifiées et ladite au moins une deuxième partie des données de première amplitude et de première phase comme nouvelles données d'amplitude et de phase itérées ou en divisant les données modifiées d'amplitude et de deuxième phase en au moins une première et au moins une troisième partie et en divisant les données de première amplitude et de première phase en au moins une première et au moins une troisième partie et en utilisant ladite au moins une première partie des données modifiées d'amplitude et de deuxième phase et un mélange de ladite au moins une troisième partie des données de première amplitude et de première phase et de ladite au moins une troisième partie des données modifiées d'amplitude et de deuxième phase comme nouvelle amplitude itérative et nouvelles données de phase itérative ou

en divisant les données modifiées d'amplitude et de deuxième phase en au moins une première et au moins une troisième partie et en divisant les données de première amplitude et de première phase en au moins une première et au moins une troisième partie et en utilisant ladite au moins une première partie des données de première amplitude et de première phase et un mélange de ladite au moins une troisième partie des données de première amplitude et de première phase et de ladite au moins une troisième partie des données modifiées d'amplitude et de deuxième phase comme nouvelle amplitude itérative et nouvelles données de phase itérative ou

en divisant les données modifiées d'amplitude et de deuxième phase en au moins une première et au moins une deuxième partie et au moins une deuxième partie et au moins une troisième partie et en divisant les données de première amplitude et de première phase en au moins une première et au moins une deuxième partie et au moins une troisième partie et en utilisant ladite au moins une première partie de la première amplitude et des données de première phase et de ladite au moins une deuxième partie des données modifiées d'amplitude et de deuxième phase et un mélange de ladite au moins une troisième partie des données de première amplitude et de première phase et de ladite au moins une troisième partie de ladite au moins une deuxième partie des données modifiées d'amplitude et de deuxième phase comme nouvelle amplitude itérative et nouvelles données de phase itérative

et la combinaison de données plus réelles avec une transformation de la première magnitude et de la première phase est effectuée

en divisant les données plus réelles en au moins une première et au moins une deuxième partie et en divisant la transformation des données de la première grandeur et de la première phase en au moins une première et au moins une deuxième partie et en utilisant ladite au moins une première partie des données plus réelles et ladite au moins une deuxième partie de la transformation des données de la première grandeur et de la première phase comme nouvelles données ou

en divisant les données plus réelles en au moins une première partie et au moins une troisième partie et en divisant la transformation des données de la première grandeur et de la première phase en au moins une première partie et au moins une troisième partie et en utilisant ladite au moins une première partie des données plus réelles et un mélange de ladite au moins une troisième partie de la transformation des données de la première grandeur et de la première phase et de ladite au moins une troisième partie des données plus réelles comme nouvelles données ou

en divisant les données plus réelles en au moins une première partie et au moins une troisième partie et en divisant la transformation des données de la première amplitude et de la première phase en au moins une première partie et au moins une troisième partie et en utilisant ladite au moins une première partie de la transformation des données de la première amplitude et de la première phase et un mélange de la au moins un tiers de la transformation des données de la première amplitude et de la première phase et dudit au moins un tiers des données plus réelles comme nouvelles données ou

en divisant les données plus réelles en au moins une première et au moins une deuxième partie et au moins une deuxième et au moins une troisième partie et en divisant la transformation de la première grandeur et des données de la première phase en au moins une première et au moins une deuxième partie et au moins une troisième partie et en utilisant ladite au moins une première partie de la transformation des données de la première grandeur et de la première phase et de ladite au moins une deuxième partie des données plus réelles et un mélange dudit au moins un tiers de la transformation des données de la première grandeur et de la première phase et dudit au moins un tiers de ladite au moins une deuxième partie des données plus réelles comme nouvelles données

et la combinaison des données de magnitude et de phase modifiées avec les données de première magnitude et de première phase (étape 3a) est effectuée

en divisant les données d'amplitude modifiée et de phase modifiée en au moins une première et au moins une deuxième partie et en divisant les données de première amplitude et de première phase en au moins une première et au moins une deuxième partie et en utilisant ladite au moins une première partie des données d'amplitude modifiée et de phase modifiée et ladite au moins une deuxième partie des données de première amplitude et de première phase comme nouvelles données d'amplitude et de phase itérées ou

en divisant les données d'amplitude modifiée et de phase modifiée en au moins une première et au moins une troisième partie et en divisant les données de première amplitude et de première phase en au moins une première et au moins une troisième partie et en utilisant ladite au moins une première partie des données d'amplitude modifiée et de phase modifiée et un mélange de ladite au moins une troisième partie des données de première amplitude et de première phase et de ladite au moins une troisième partie des données d'amplitude modifiée et de phase modifiée comme nouvelles données d'amplitude et de phase itérées ou en divisant les données d'amplitude et de phase modifiées en au moins une première et au moins une troisième partie et en divisant les données de première amplitude et de première phase en au moins une première et au moins une troisième partie et en utilisant ladite au moins une première partie des données de première amplitude et de première phase et un mélange de ladite au moins une troisième partie des données de première amplitude et de première phase et de ladite au moins une troisième partie des données d'amplitude et de phase modifiées comme nouvelles données d'amplitude et de phase itérées ou

en divisant la grandeur modifiée et les données de phase modifiées en au moins une première et au moins une deuxième partie et au moins une deuxième partie et au moins une troisième partie et en divisant la première grandeur et les données de phase modifiées en au moins une première et au moins une deuxième partie et au moins une troisième partie et en utilisant ladite au moins une première partie de la première grandeur et des données de première phase et de ladite au moins une deuxième partie des données d'amplitude modifiée et de phase modifiée et un mélange de ladite au moins une troisième partie des données de première amplitude et de première phase et de ladite au moins une troisième partie de ladite au moins une deuxième partie des données d'amplitude modifiée et de phase modifiée comme nouvelles données d'amplitude et de phase itérées.

**2.** Procédé selon la revendication 1, dans lequel les étapes 1 à 3 sont effectuées dans chaque traitement des étapes de bouclage i et ii et l'étape 3a n'est pas effectuée.

**3.** Procédé selon l'une quelconque des revendications précédentes, dans lequel la première transformation est utilisée pour transformer à l'étape 3.

**4.** Procédé selon l'une quelconque des revendications précédentes, dans lequel la première transformation est une transformée de Fourier de courte durée (STFT) ou une transformée à Q constant.

**5.** Procédé selon l'une quelconque des revendications précédentes, dans lequel la transformation à l'étape 1 et/ou à l'étape c est effectuée par un inverse de la première transformation.

**6.** Procédé selon l'une quelconque des revendications précédentes, dans lequel le calcul de données réelles supplémentaires à partir des données complexes à l'étape 2 est effectué par le calcul de données réelles en éliminant la partie imaginaire.

**7.** Procédé selon l'une quelconque des revendications précédentes, dans lequel la modification des données d'amplitude et de phase pour obtenir des données d'amplitude et de phase modifiées à l'étape i est effectuée en utilisant une modification, spécialement définie par au moins une équation différentielle partielle, spécialement telle que représentant une diffusion d'un modèle physique, ou spécialement définie par au moins un tenseur ou par au moins un champ de tenseur ou spécialement définie par une étape d'itération, spécialement consécutive, d'un algorithme de gradient, l'algorithme de gradient étant un algorithme minimisant une fonction définie sur les premières données audio ou les données d'amplitude et de phase itérées.

**8.** Procédé selon la revendication précédente 7,
dans lequel chacun des au moins un champ de tenseur est constitué par une fonction de tenseur ou chaque tenseur est constitué par une fonction de tenseur ou un noyau de convolution.

**9.** Procédé selon l'une quelconque des revendications précédentes, dans lequel chaque modification des données de grandeur et de phase itérées pour obtenir des données de grandeur et de phase modifiées à l'étape i est effectuée en appliquant une étape d'itération, en particulier consécutive, d'un algorithme de gradient, l'algorithme de gradient étant un algorithme minimisant une fonction définie sur les premières données audio ou les données de grandeur et de phase itérées.

**10.** Procédé selon l'une quelconque des revendications précédentes 7 à 9, dans lequel la modification est anisotrope.

**11.** Procédé selon l'une quelconque des revendications précédentes, dans lequel l'étape 3 comprend la projection des données d'amplitude et de phase modifiées sur les premières données audio ou les données d'amplitude et de phase itérées et/ou le masquage des données d'amplitude et de phase modifiées, en particulier par une projection utilisant un masque binaire ou un masque de transparence (alpha), en particulier dans le domaine temporel ou temps-fréquence et/ou dans lequel l'étape 3a comprend la projection des données modifiées d'amplitude et de phase sur les premières données audio ou les données d'amplitude et de phase itérées et/ou le masquage des données d'amplitude et de phase modifiées, en particulier par une projection utilisant un masque binaire ou un masque de transparence (alpha), en particulier dans le domaine temporel ou temps-fréquence,

12. Procédé selon l'une quelconque des revendications précédentes, comprenant l'acquisition des premières données audio par numérisation d'un son.

13. Procédé selon l'une quelconque des revendications précédentes, comprenant l'acquisition des premières données audio par traitement ou modification des données audio.

14. Dispositif de traitement audio comprenant au moins un processeur et au moins une mémoire pour stocker des parties et/ou des blocs de et/ou les premières données audio complètes, dans lequel le dispositif est agencé pour traiter les premières données audio selon l'une des revendications 1 à 13 en utilisant le au moins un processeur pour exécuter les étapes a à c.

Fig. 1

Fig. 2

Fig. 3

Fig. 4

Fig. 5

Fig. 6

First Audio Data

**Time to Time-Frequency Transform**
Step a

First Magnitude — First Phase

Step b

Iterated Magnitude — Iterated Phase

**Magnitude/Phase Modification**
Step i

Modified Magnitude — Modified Phase

**Condition: Restore Phase ?**
Step ii

No — Modified Phase

Yes

Modified Magnitude — Modified Phase

**Complex Inverse Transform**
Step 1

Real Signal — Imaginary Signal

**Select Real Signal**
Step 2

Real Signal

**Time to Time-Frequency Transform**
Step 3.i

Second Phase

Modified Magnitude

**Magnitude/Phase Combination**
Step 3.ii/3a

First Magnitude
First Phase

New Iterated Magnitude — New Iterated Phase

New Iterated Magnitude

**Condition: Continue to Iterate?**

Yes

New Iterated Phase

No

New Iterated Magnitude — New Iterated Phase

**Inverse Transform**
Step c

Output Real Signal

Fig. 7

35

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **R. KIMMEL ; R. MALLADI ; N. SOCHEN.** Images Embedded to Maps and Minimal Surfaces: Movies, Colour, Texture and Volumetric Medical Images. *International Journal of computer vision,* 2000, vol. 39 (2), 111-129
- **D. TSCHUMPERLÉ ; R. DERICH.** Vector-Valued Image Regularization with PDE's: a Common Framework for Different Applications. *IEEE Transactions on Pattern Analysis and Machine Intelligence,* vol. 27 (4
- **AMIR ADLER et al.** Audio Inpainting. *IEEE Transactions on Audio, Speech, and Language Processing,* vol. 20 (3
- **LEON A. GATYS et al.** *Texture Synthesis Using Convolutional Neural Networks, https://pdfs.semantic-schol-ar.org/f54a/e5229960b828db7cd963150c8b8bc2 684737.pdf*
- **HRISTO ZHIVOMIROV.** *Short-Time Fourier Transformation and inverse Short-Time Fourier Transformation,* 05 August 2015